## Europäisches Patentamt

## European Patent Office

## Office européen des brevets

(11) Publication number: **0 157 276**

**B1**

## EUROPEAN PATENT SPECIFICATION

(45) Date of publication of patent specification: **06.07.88**

(51) Int. Cl.⁴: **C 04 B 35/46, H 01 C 7/10**

(21) Application number: **85103135.1**

(22) Date of filing: **18.03.85**

(54) **Voltage-dependent non-linear resistance ceramic composition.**

(30) Priority: 30.03.84 JP 64014/84
31.05.84 JP 111171/84
31.05.84 JP 111172/84
18.08.84 JP 171987/84
18.08.84 JP 171988/84
18.08.84 JP 171989/84
18.08.84 JP 171990/84
18.08.84 JP 171991/84

(43) Date of publication of application:
09.10.85 Bulletin 85/41

(45) Publication of the grant of the patent:
06.07.88 Bulletin 88/27

(84) Designated Contracting States:
DE FR GB

(56) References cited:
EP-A-0 044 981
EP-A-0 070 540
EP-A-0 080 611
EP-A-0 101 824

(73) Proprietor: **Matsushita Electric Industrial Co., Ltd.**
**1006, Oaza Kadoma**
**Kadoma-shi Osaka-fu, 571 (JP)**

(72) Inventor: **Noi, Keiichi**
**16, Tanabe-Kutsunugi Tanabe-cho**
**Tsuzuki-gun Kyoto Prefecture, 610-03 (JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**D-8000 München 40 (DE)**

Courier Press, Leamington Spa, England.

## Description

The present invention relates to a voltage dependant non-linear resistance ceramic composition for use in surge absorbing, noise elimination and a measure against undesirable electric changing in various electric apparatuses and electronic apparatuses.

Heretofore, in various electric apparatuses and electronic apparatuses, in order to absorb extraordinary high voltage, for elimination of noise, for elimination of arc, and the like, SiC baristors or varistors of ZnO system having a voltage-dependent non-linear resistance characteristics are used. Voltage-current characteristics of such baristors can be approximately represented by the following equation:

$$I = (V/C)^\alpha$$

wherein I is current, V is voltage, C is a constant proper for the baristor, and α is a voltage non-linearity exponent.

The α of the SiC baristor is about 2—7, and for the ZnO system baristor there are some that reach 50. Though such baristors have superior characteristics for absorbing relatively high voltage called surge, for voltages lower than baristor voltage (for instance, absorption of noise) almost no effect occurs since their dielectric constants are low and their inherent capacitances are small, and their dielectric losses tan δ are as large as 5—10%.

On the other hand, for elimination of low voltage noise, static electricity, or the like, by appropriately selecting composition and firing conditions semiconductor ceramic capacitors having an apparent dielectric constant of about $5 \times 10^4$—$6 \times 10^4$ and a tan δ of about 1% are utilized.

However, these semiconductor ceramic capacitors are liable to be destroyed or become non-functional as capacitors when extraordinary high voltage such as a surge is impressed thereon or a current above a certain limit is impressed on the element. For such reason, in electric apparatuses or electronic apparatuses, for the purpose of both the absorption of high voltage surge and the elimination of low voltage noise, the baristors are used combined with capacitors and other components (for instance, a coil), and for instance, a noise filter has such configuration.

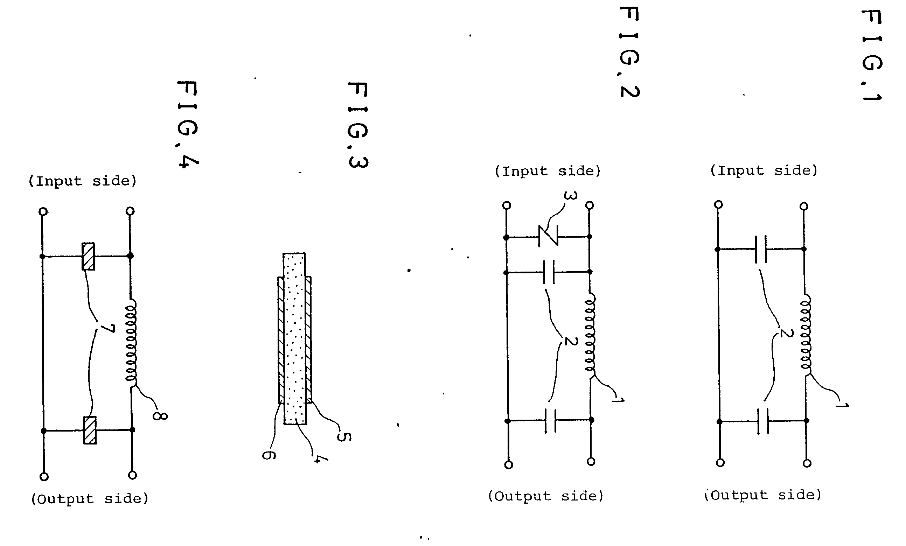

Fig. 1 shows a general noise filter circuit, Fig. 2 shows a conventional noise filter circuit constituted by combining a baristor, capacitors and a coil, and 1 is the coil, 2 are the capacitors and 3 is the baristor.

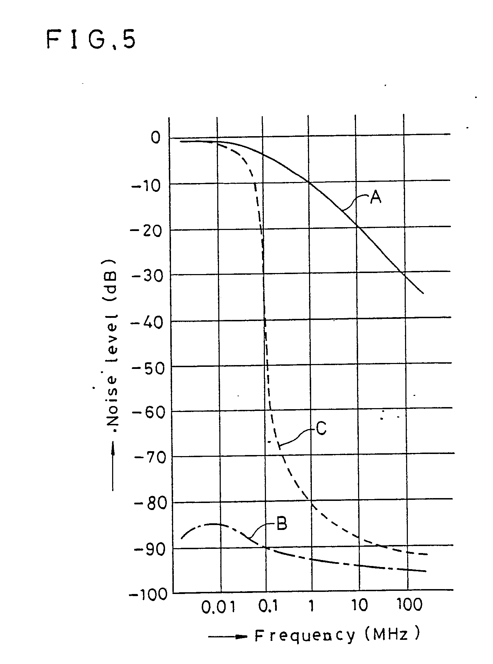

When a noise input A shown in Fig. 5 is impressed on these circuits, the output characteristics from general noise filter circuit of Fig. 1 are such as C of Fig. 5, and noise is not sufficiently eliminated. Output characteristics from the conventional noise filter circuit including a baristor shown in Fig. 2 are such as B of Fig. 5, and though noise is eliminated, such configuration has a shortcoming that it has a large number of components in the inside of the apparatus and besides is contrary to the tendency of miniaturization of the apparatus.

Accordingly, an electronic component, which absorbs an extraordinary high voltage, can eliminate low voltage, such as noise, and has a small number of components, and is capable of miniaturization, is demanded.

Summary of the invention

Accordingly, the present invention intends to provide a voltage-dependent non-linear resistance ceramic composition comprising $SrTiO_3$ wherein ratios of Sr/Ti are 1.05—0.95, $Sr_{1-x}Ba_xTiO_3$ (0.001≦x≦0.300) or $Sr_{1-x}Ca_xTiO_3$ (0.001≦x≦0.300) as host material, including 0.001—2.000 mol% of $Y_2O_3$ as metal oxide for semiconductorization acceleration, and including further oxides in defined amounts according to claims 1—8, which segregate at the grain boundaries to make a high resistance at the grain boundaries.

Brief explanation of the drawing

Fig. 1 is a circuit diagram of a general noise filter.

Fig. 2 is a circuit diagram of a noise filter using the conventional varistors and the capacitors.

Fig. 3 is a sectional view of an element using the voltage dependent non-linear resistance ceramic composition in accordance with the present invention.

Fig. 4 is a circuit diagram of a noise filter using the voltage dependent non-linear resistance ceramic composition in accordance with the present invention.

Fig. 5 is a characteristic diagram showing the relation between input noise and output of a circuit of noise filters of the present invention and the prior art.

Fig. 6 is a characteristic diagram showing the relation between Sr/Ti ratio and specific resistance.

Fig. 7 is a characteristic diagram showing the relation between Sr/Ti ratio and tan δ.

The best mode for embodying the invention

As a result of various experiments, the inventors made a voltage dependent non-linear resistance ceramic composition in a quite different way from the conventional composition by using $SrTiO_3$, $Sr_{a-x}Ba_xTiO_3$ (0.001≦x≦0.300) or $Sr_{1-x}Ca_xTiO_3$ (0.001≦x≦0.300) as host material, and $Y_2O_3$ as

2

**0 157 276**

semiconductorization accelerating agent, and by further adding $Co_2O_3$ and CuO, and further adding if necessary an appropriate amount of additive. Hereafter, the present invention is described with respect to embodiments, with reference to the accompanying drawings.

Example 1

After taking $SrCO_3$ and $TiO_2$ in such a manner that $SrTiO_3$ having a Sr/Ti atom ratio of 0.98 is obtained, they are blended for 15 hours by the wet method in a ball-mill or the like. After drying the mixture it is ground. Thereafter the ground powder is calcined for 3 hours at 1100°C in air and again ground to produce $SrTiO_3$ powder.

Next, $SrTiO_3$, $Y_2O_3$, $Co_2O_3$, CuO, $Ag_2O$ and $Al_2O_3$ are measured and blended as ingredients as shown in the following Table 1.

TABLE 1

| | Composition ratio | | | | | |
|---|---|---|---|---|---|---|
| | First component | Second component | Third component | Fourth component | Fifth component | |
| Sample No. | $SrTiO_3$ (mol%) | $Y_2O_3$ (mol%) | $Co_2O_3$ (mol%) | CuO (mol%) | Additive | mol% |
| 1* | 99.999 | 0.001 | 0.000 | 0.000 | — | 0.000 |
| 2* | 99.900 | 0.100 | 0.000 | 0.000 | — | 0.000 |
| 3* | 99.000 | 1.000 | 0.000 | 0.000 | — | 0.000 |
| 4* | 98.000 | 2.000 | 0.000 | 0.000 | — | 0.000 |
| 5* | 97.000 | 3.000 | 0.000 | 0.000 | — | 0.000 |
| 6* | 99.998 | 0.001 | 0.001 | 0.000 | — | 0.000 |
| 7 | 99.889 | 0.100 | 0.010 | 0.001 | — | 0.000 |
| 8 | 99.199 | 0.300 | 0.500 | 0.001 | — | 0.000 |
| 9 | 97.999 | 1.000 | 1.000 | 0.001 | — | 0.000 |
| 10 | 96.499 | 1.500 | 2.000 | 0.001 | — | 0.000 |
| 11* | 95.499 | 1.500 | 3.000 | 0.001 | — | 0.000 |
| 12 | 99.988 | 0.001 | 0.001 | 0.010 | — | 0.000 |
| 13 | 99.889 | 0.010 | 0.001 | 0.100 | — | 0.000 |
| 14 | 99.489 | 0.010 | 0.001 | 0.500 | — | 0.000 |
| 15 | 97.999 | 1.000 | 0.001 | 1.000 | — | 0.000 |
| 16* | 96.999 | 1.000 | 0.001 | 2.000 | — | 0.000 |
| 17 | 99.700 | 0.100 | 0.100 | 0.100 | — | 0.000 |
| 18 | 99.300 | 0.100 | 0.300 | 0.300 | — | 0.000 |
| 19 | 98.600 | 0.100 | 0.300 | 1.000 | — | 0.000 |
| 20 | 98.600 | 0.100 | 1.000 | 0.300 | — | 0.000 |
| 21 | 97.700 | 0.300 | 1.500 | 0.500 | — | 0.000 |
| 22 | 97.200 | 1.000 | 1.000 | 0.800 | — | 0.000 |

3

0 157 276

TABLE 1 (cont'd)

| | | Composition ratio | | | | | |
|---|---|---|---|---|---|---|---|
| | | First component | Second component | Third component | Fourth component | Fifth component | |
| | Sample No. | $SrTiO_3$ (mol%) | $Y_2O_3$ (mol%) | $Co_2O_3$ (mol%) | $CuO$ (mol%) | Additive | mol% |
| | 23 | 96.000 | 2.000 | 1.000 | 1.000 | — | 0.000 |
| | 24 | 99.699 | 0.100 | 0.100 | 0.100 | $Ag_2O$ | 0.001 |
| | 25 | 99.699 | 0.100 | 0.100 | 0.100 | $Al_2O_3$ | 0.001 |
| | 26 | 99.490 | 0.100 | 0.300 | 0.100 | $Ag_2O$ | 0.010 |
| | 27 | 99.200 | 0.100 | 0.300 | 0.100 | $Al_2O_3$ | 0.300 |
| | 28 | 98.250 | 0.300 | 0.300 | 0.150 | $Ag_2O$ | 1.000 |
| | 29 | 97.150 | 0.500 | 0.300 | 0.050 | $Al_2O_3$ | 2.000 |
| | 30 | 95.900 | 0.500 | 0.500 | 0.100 | $Al_2O_3$ | 3.000 |
| | 31* | 94.950 | 0.800 | 0.700 | 0.050 | $Ag_2O$ | 3.500 |
| | 32 | 99.699 | 0.100 | 0.100 | 0.050 | $Ag_2O$<br>$Al_2O_3$ | 0.001<br>0.050 |
| | 33 | 99.240 | 0.100 | 0.100 | 0.050 | $Ag_2O$<br>$Al_2O_3$ | 0.010<br>0.500 |
| | 34 | 98.650 | 0.100 | 0.100 | 0.050 | $Ag_2O$<br>$Al_2O_3$ | 0.100<br>1.000 |
| | 35 | 97.350 | 0.300 | 0.200 | 0.100 | $Ag_2O$<br>$Al_2O_3$ | 0.050<br>2.000 |
| | 36 | 96.840 | 0.300 | 0.300 | 0.050 | $Ag_2O$<br>$Al_2O_3$ | 0.010<br>2.500 |
| | 37* | 95.800 | 0.500 | 0.200 | 0.100 | $Ag_2O$<br>$Al_2O_3$ | 0.200<br>3.200 |

Marked * are comparison examples which are outside the scope of Claims 1 and 2 respectively.

Further, the mixture is blended in a ball mill for 20 hours, dried and then ground. And subsequently, by adding 10—15 weight% of organic binder such as polyvinylalcohol the powder is granulated, and formed into a disk having a diameter of 10 mm and a thickness of 1 mm by application of a pressing force of about 98.1 MPa (1.0 t/cm²).

Then, the press-formed disk is fired for 4 hours at a temperature of 1380°C in a reducing atmosphere of $N_2$ (90% in volume)+$H_2$(10% in volume). It is further heat treated at 1100°C for 4 hours in air. The disk shaped sintered body 1 shown in Fig. 3 obtained by the above-mentioned process has almost the same component ratios as these of the starting materials.

On both faces of the sintered body 4, electrodes 5 and 6 are formed by applying conductive paint containing silver powder or the like and subsequently burning.

Characteristics of the element obtained in the above-mentioned manner are shown in Table 2.

4

TABLE 2

| Sample No. | $V_{1mA/mm}(V)$ | $\alpha$ | $\varepsilon$ | tan $\delta$(%) |
|---|---|---|---|---|
| 1* | 83.0 | 1.3 | $1.0 \times 10^6$ | 94.0 |
| 2* | 85.5 | 1.9 | $1.4 \times 10^6$ | 91.2 |
| 3* | 82.0 | 2.8 | $1.2 \times 10^6$ | 87.1 |
| 4* | 94.0 | 3.5 | $7.6 \times 10^5$ | 77.0 |
| 5* | 103.7 | 4.4 | $3.2 \times 10^5$ | 70.8 |
| 6* | 50.6 | 6.0 | $1.9 \times 10^4$ | 6.4 |
| 7 | 37.3 | 7.9 | $3.2 \times 10^4$ | 3.8 |
| 8 | 33.8 | 8.0 | $3.9 \times 10^4$ | 3.1 |
| 9 | 31.7 | 8.6 | $4.5 \times 10^4$ | 3.0 |
| 10 | 35.4 | 8.1 | $5.2 \times 10^4$ | 3.1 |
| 11* | 55.1 | 7.2 | $9.4 \times 10^4$ | 6.0 |
| 12 | 42.5 | 8.2 | $4.9 \times 10^4$ | 4.0 |
| 13 | 43.8 | 8.9 | $5.8 \times 10^4$ | 3.8 |
| 14 | 58.2 | 9.2 | $4.0 \times 10^4$ | 3.5 |
| 15 | 70.4 | 10.3 | $3.3 \times 10^4$ | 3.1 |
| 16* | 210.3 | 10.0 | $3.1 \times 10^3$ | 1.4 |
| 17 | 35.2 | 8.0 | $5.2 \times 10^4$ | 3.5 |
| 18 | 30.7 | 8.7 | $5.6 \times 10^4$ | 3.4 |
| 19 | 47.1 | 9.3 | $5.0 \times 10^4$ | 3.0 |
| 20 | 43.3 | 9.5 | $4.7 \times 10^4$ | 3.1 |
| 21 | 39.9 | 9.7 | $4.6 \times 10^4$ | 3.0 |
| 22 | 37.8 | 10.2 | $4.8 \times 10^4$ | 3.0 |
| 23 | 41.0 | 10.5 | $4.4 \times 10^4$ | 3.0 |
| 24 | 42.3 | 9.3 | $6.1 \times 10^4$ | 2.4 |
| 25 | 40.7 | 8.7 | $5.2 \times 10^4$ | 3.3 |
| 26 | 44.4 | 9.9 | $6.3 \times 10^4$ | 2.2 |
| 27 | 42.3 | 9.1 | $5.0 \times 10^4$ | 3.1 |
| 28 | 57.2 | 10.7 | $4.1 \times 10^4$ | 1.9 |
| 29 | 48.1 | 10.0 | $4.2 \times 10^4$ | 3.0 |
| 30 | 50.3 | 9.8 | $3.9 \times 10^4$ | 2.9 |
| 31* | 319.6 | 10.1 | $4.2 \times 10^3$ | 1.5 |

TABLE 2 (cont'd)

| Sample No. | $V_{1mA/mm}(V)$ | $\alpha$ | $\varepsilon$ | tan $\delta(\%)$ |
|---|---|---|---|---|
| 32 | 39.9 | 9.4 | $6.9 \times 10^4$ | 1.9 |
| 33 | 44.3 | 9.9 | $6.2 \times 10^4$ | 1.8 |
| 34 | 49.7 | 10.2 | $4.9 \times 10^4$ | 1.7 |
| 35 | 50.8 | 10.4 | $4.3 \times 10^4$ | 1.6 |
| 36 | 61.3 | 10.8 | $4.0 \times 10^4$ | 1.6 |
| 37* | 104.0 | 9.3 | $5.1 \times 10^3$ | 3.9 |

Marked * are comparison examples which are outside the scope of Claims 1 and 2, respectively.

Herein, assessment of characteristics of the elements as varistor can be made by $\alpha$ and C in a voltage-current characteristic equation:

$$I=(V/C)^\alpha$$

wherein I is current, V is voltage, C is a constant proper to the varistor and $\alpha$ is a non-linarity exponent. In the present invention, since accurate measurement of C is difficult, characteristic assessment as varistor is made by the value of varistor voltage for unit thickness when 1 mA of varistor current is made to flow (hereinafter such varistor voltage is called as $V_{1mA}/mm$), and by the value of $\alpha=1/\log(V_{10mA}/V_{1mA})$, wherein $V_{10mA}$ is a varistor voltage when a varistor current of 10 mA is flowed and $V_{1mA}$ is a variator voltage when varistor current of 1 mA is flowed.

And characteristic assessment as the capacitors are made by a dielectric constant $\varepsilon$ and dielectric loss tan $\delta$ at a measurement frequency of 1 KHz.

Example 2

SrCO$_3$, BaCO$_3$ and TiO$_2$ are measured and blended in a manner to make $Sr_{0.9}Ba_{0.1}TiO_3$, and blended and ground in a ball mill by a wet method for 15 hours. And the mixture is dried and ground, and then fired at 1200°C for 3 hours, and further ground thereby to prepare powder of $Sr_{0.9}Ba_{0.1}TiO_3$. Then, $Y_2O_3$, $Co_2O_3$, CuO, $Ag_2O$ and $Al_2O_3$ are added to the above-mentioned powder of $Sr_{0.9}Ba_{0.1}TiO_3$, in a manner to make the composition ratios shown in Table 3.

# 0 157 276

TABLE 3

| | Composition ratio | | | | | |
|---|---|---|---|---|---|---|
| | First component | Second component | Third component | Fourth component | Fifth component | |
| Sample No. | $Sr_{0.9}Ba_{0.1}TiO_3$ (mol%) | $Y_2O_3$(mol%) | $Co_2O_3$(mol%) | CuO(mol%) | Additive | Mol% |
| 1* | 99.999 | 0.001 | 0 | 0 | — | — |
| 2* | 99.900 | 0.100 | 0 | 0 | — | — |
| 3* | 99.000 | 1.000 | 0 | 0 | — | — |
| 4* | 98.000 | 2.000 | 0 | 0 | — | — |
| 5* | 97.000 | 3.000 | 0 | 0 | — | — |
| 6* | 99.998 | 0.001 | 0.001 | 0 | — | — |
| 7 | 99.889 | 0.100 | 0.010 | 0.001 | — | — |
| 8 | 99.199 | 0.300 | 0.500 | 0.001 | — | — |
| 9 | 97.999 | 1.000 | 1.000 | 0.001 | — | — |
| 10 | 96.499 | 1.500 | 2.000 | 0.001 | — | — |
| 11* | 95.499 | 1.500 | 3.000 | 0.001 | — | — |
| 12 | 99.988 | 0.001 | 0.001 | 0.001 | — | — |
| 13 | 99.889 | 0.010 | 0.001 | 0.100 | — | — |
| 14 | 99.489 | 0.010 | 0.001 | 0.500 | — | — |
| 15 | 97.999 | 1.000 | 0.001 | 1.000 | — | — |
| 16* | 96.999 | 1.000 | 0.001 | 2.000 | — | — |
| 17 | 99.700 | 0.100 | 0.100 | 0.100 | — | — |
| 18 | 99.300 | 0.100 | 0.300 | 0.300 | — | — |
| 19 | 98.600 | 0.100 | 0.300 | 1.000 | — | — |
| 20 | 98.600 | 0.100 | 1.000 | 0.300 | — | — |
| 21 | 97.700 | 0.300 | 1.500 | 0.500 | — | — |
| 22 | 97.200 | 1.000 | 1.000 | 0.800 | — | — |
| 23 | 96.000 | 2.000 | 1.000 | 1.000 | — | — |
| 24 | 99.699 | 0.100 | 0.100 | 0.100 | $Ag_2O$ | 0.001 |
| 25 | 99.699 | 0.100 | 0.100 | 0.100 | $Al_2O_3$ | 0.001 |
| 26 | 99.490 | 0.100 | 0.300 | 0.100 | $Ag_2O$ | 0.010 |
| 27 | 99.200 | 0.100 | 0.300 | 0.100 | $Al_2O_3$ | 0.300 |
| 28 | 98.250 | 0.300 | 0.300 | 0.150 | $Ag_2O$ | 1.000 |

7

TABLE 3 (cont'd)

| | | Composition ratio | | | | |
|---|---|---|---|---|---|---|
| | | First component | Second component | Third component | Fourth component | Fifth component | |
| Sample No. | $Sr_{0.9}Ba_{0.1}TiO_3$ (mol%) | $Y_2O_3$(mol%) | $Co_2O_3$(mol%) | CuO(mol%) | Additive | Mol% |
| 29 | 97.150 | 0.500 | 0.300 | 0.050 | $Al_2O_3$ | 2.000 |
| 30 | 95.900 | 0.500 | 0.500 | 0.100 | $Al_2O_3$ | 3.000 |
| 31* | 94.950 | 0.800 | 0.700 | 0.050 | $Ag_2O$ | 3.500 |
| 32 | 99.699 | 0.100 | 0.100 | 0.050 | $Ag_2O$ $Al_2O_3$ | 0.001 0.050 |
| 33 | 99.240 | 0.100 | 0.100 | 0.050 | $Ag_2O$ $Al_2O_3$ | 0.010 0.500 |
| 34 | 98.650 | 0.100 | 0.100 | 0.050 | $Ag_2O$ $Al_2O_3$ | 0.100 1.000 |
| 35 | 97.350 | 0.300 | 0.200 | 0.100 | $Ag_2O$ $Al_2O_3$ | 0.050 2.000 |
| 36 | 96.840 | 0.300 | 0.300 | 0.050 | $Ag_2O$ $Al_2O_3$ | 0.010 2.500 |
| 37* | 95.800 | 0.500 | 0.200 | 0.100 | $Ag_2O$ $Al_2O_3$ | 0.200 3.200 |

Marked * are comparison examples which are outside the scope of Claims 1 and 2, respectively.

The above-mentioned starting material is mixed, press-formed and fired under the same conditions as in Example 1 to make a similar element as that of Example 1. The characteristics of the element are measured in the same way as that of Example 1, and the measured results are shown in Table 4.

TABLE 4

| Sample No. | $V_{1mA/mm}$(V) | α | ε | tan δ(%) |
|---|---|---|---|---|
| 1* | 85.0 | 1.3 | $1.0 \times 10^6$ | 90.9 |
| 2* | 86.9 | 1.8 | $1.4 \times 10^6$ | 84.5 |
| 3* | 84.5 | 2.0 | $1.2 \times 10^6$ | 82.0 |
| 4* | 103.0 | 2.9 | $7.5 \times 10^5$ | 80.0 |
| 5* | 112.1 | 3.8 | $1.0 \times 10^5$ | 71.8 |
| 6* | 57.4 | 4.7 | $1.6 \times 10^4$ | 9.2 |
| 7 | 38.2 | 7.2 | $3.3 \times 10^4$ | 3.9 |
| 8 | 36.3 | 7.3 | $3.8 \times 10^4$ | 3.3 |
| 9 | 33.8 | 7.8 | $4.5 \times 10^4$ | 3.2 |
| 10 | 37.7 | 8.0 | $4.8 \times 10^4$ | 3.1 |

## 0 157 276

TABLE 4 (Cont'd)

| Sample No. | $V_{1mA/mm}(V)$ | $\alpha$ | $\varepsilon$ | tan $\delta$(%) |
|---|---|---|---|---|
| 11* | 61.9 | 5.7 | $7.0\times10^4$ | 10.0 |
| 12 | 44.4 | 7.7 | $4.5\times10^4$ | 3.9 |
| 13 | 45.7 | 7.9 | $5.0\times10^4$ | 3.8 |
| 14 | ·60.4 | 8.1 | $4.3\times10^4$ | 3.7 |
| 15 | 71.3 | 9.2 | $3.9\times10^4$ | 3.2 |
| 16* | 235.3 | 8.1 | $2.8\times10^3$ | 1.9 |
| 17 | 39.1 | 7.2 | $4.8\times10^4$ | 3.4 |
| 18 | 32.9 | 7.5 | $5.0\times10^4$ | 3.4 |
| 19 | 49.8 | 7.9 | $5.2\times10^4$ | 3.3 |
| 20 | 40.8 | 8.8 | $4.7\times10^4$ | 3.0 |
| 21 | 38.3 | 8.8 | $4.6\times10^4$ | 3.0 |
| 22 | 33.5 | 8.9 | $4.4\times10^4$ | 3.0 |
| 23 | 39.9 | 9.1 | $4.0\times10^4$ | 3.0 |
| 24 | 43.5 | 9.2 | $5.3\times10^4$ | 2.5 |
| 25 | 44.6 | 8.7 | $4.8\times10^4$ | 3.2 |
| 26 | 59.8 | 9.7 | $5.1\times10^4$ | 2.4 |
| 27 | 48.7 | 9.0 | $4.7\times10^4$ | 3.2 |
| 28 | 61.8 | 10.5 | $4.0\times10^4$ | 2.4 |
| 29 | 50.3 | 9.5 | $4.0\times10^4$ | 3.5 |
| 30 | 52.1 | 9.7 | $2.1\times10^4$ | 3.1 |
| 31* | 309.0 | 9.9 | $3.3\times10^3$ | 1.9 |
| 32 | 42.5 | 9.5 | $5.7\times10^4$ | 1.9 |
| 33 | 48.1 | 9.7 | $5.5\times10^4$ | 1.8 |
| 34 | 52.0 | 9.9 | $3.1\times10^4$ | 1.8 |
| 35 | 54.8 | ·10.0 | $3.3\times10^4$ | 1.9 |
| 36 | 63.7 | 10.3 | $3.9\times10^4$ | 2.3 |
| 37* | 114.0 | 9.1 | $2.1\times10^3$ | 5.0 |

Example 3

$SrCO_3$, $CaCO_3$ and $TiO_2$ are blended in a manner to make $Sr_{0.9}Ca_{0.1}TiO_3$, and blended and ground in a ball mill by a wet method for 15 hours. And the mixture is dried and ground, and then fired at 1200°C for 3 hours, and further ground thereby to prepare powder of $Sr_{0.9}Ca_{0.1}TiO_3$. Then, $Y_2O_3$, $Co_2O_3$, $CuO$, $Ag_2O$ and $Al_2O_3$ are added to the above-mentioned powder of $Sr_{0.9}Ca_{0.1}TiO_3$, in a manner to make the composition ratios shown in Table 5.

TABLE 5

| Sample No. | Composition ratio | | | | | |
| --- | --- | --- | --- | --- | --- | --- |
| | First component | Second component | Third component | Fourth component | Fifth component | |
| | $Sr_{0.9}Cr_{0.1}TiO_3$ (mol%) | $Y_2O_3$(mol%) | $Co_2O_3$(mol%) | CuO(mol%) | Additive | Mol% |
| 1* | 99.999 | 0.001 | 0 | 0 | — | — |
| 2* | 99.900 | 0.100 | 0 | 0 | — | — |
| 3* | 99.000 | 1.000 | 0 | 0 | — | — |
| 4* | 98.000 | 2.000 | 0 | 0 | — | — |
| 5* | 97.000 | 3.000 | 0 | 0 | — | — |
| 6* | 99.998 | 0.001 | 0.001 | 0 | — | — |
| 7 | 99.889 | 0.100 | 0.010 | 0.001 | — | — |
| 8 | 99.199 | 0.300 | 0.500 | 0.001 | — | — |
| 9 | 97.999 | 1.000 | 1.000 | 0.001 | — | — |
| 10 | 96.499 | 1.500 | 2.000 | 0.001 | — | — |
| 11* | 95.499 | 1.500 | 3.000 | 0.001 | — | — |
| 12 | 99.988 | 0.001 | 0.001 | 0.001 | — | — |
| 13 | 99.889 | 0.010 | 0.001 | 0.100 | — | — |
| 14 | 99.489 | 0.010 | 0.001 | 0.500 | — | — |
| 15 | 97.999 | 1.000 | 0.001 | 1.000 | — | — |
| 16* | 96.999 | 1.000 | 0.001 | 2.000 | — | — |
| 17 | 99.700 | 0.100 | 0.100 | 0.100 | — | — |
| 18 | 99.300 | 0.100 | 0.300 | 0.300 | — | — |
| 19 | 98.600 | 0.100 | 0.300 | 1.000 | — | — |
| 20 | 98.600 | 0.100 | 1.000 | 0.300 | — | — |
| 21 | 97.700 | 0.300 | 1.500 | 0.500 | — | — |
| 22 | 97.200 | 1.000 | 1.000 | 0.800 | — | — |
| 23 | 96.000 | 2.000 | 1.000 | 1.000 | — | — |
| 24 | 99.699 | 0.100 | 0.100 | 0.100 | $Ag_2O$ | 0.001 |
| 25 | 99.699 | 0.100 | 0.100 | 0.100 | $Al_2O_3$ | 0.001 |
| 26 | 99.490 | 0.100 | 0.300 | 0.100 | $Ag_2O$ | 0.010 |
| 27 | 99.200 | 0.100 | 0.300 | 0.100 | $Al_2O_3$ | 0.300 |
| 28 | 98.250 | 0.300 | 0.300 | 0.150 | $Ag_2O$ | 1.000 |

**0 157 276**

TABLE 5 (Cont'd)

| | Composition ratio | | | | | |
|---|---|---|---|---|---|---|
| | First component | Second comcponent | Third component | Fourth component | Fifth component | |
| Sample No. | $Sr_{0.9}Ca_{0.1}TiO_3$ (mol%) | $Y_2O_3$(mol%) | $Co_2O_3$(mol%) | CuO(mol%) | Additive | Mol% |
| 29 | 97.150 | 0.500 | 0.300 | 0.050 | $Al_2O_3$ | 2.000 |
| 30 | 95.900 | 0.500 | 0.500 | 0.100 | $Al_2O_3$ | 3.000 |
| 31* | 94.950 | 0.800 | 0.700 | 0.050 | $Ag_2O$ | 3.500 |
| 32 | 99.699 | 0.100 | 0.100 | 0.050 | $Ag_2O$ $Al_2O_3$ | 0.001 0.050 |
| 33 | 99.240 | 0.100 | 0.100 | 0.050 | $Ag_2O$ $Al_2O_3$ | 0.010 0.500 |
| 34 | 98.650 | 0.100 | 0.100 | 0.050 | $Ag_2O$ $Al_2O_3$ | 0.100 1.000 |
| 35 | 97.350 | 0.300 | 0.200 | 0.100 | $Ag_2O$ $Al_2O_3$ | 0.050 2.000 |
| 36 | 96.840 | 0.300 | 0.300 | 0.050 | $Ag_2O$ $Al_2O_3$ | 0.010 2.500 |
| 37* | 95.800 | 0.500 | 0.200 | 0.100 | $Ag_2O$ $Al_2O_3$ | 0.200 3.200 |

Marked * are comparison examples which are outside the scope of Claims 1 and 2, respectively.

The above-mentioned starting material is mixed, press-formed and fired under the same conditions as in Example 1 to make a similar element as that of Example 1. The characteristics of the element are measured in the same way as that of Example 1, and the measured results are shown in Table 6.

TABLE 6

| Sample No. | $V_{1mA/mm}$(V) | α | ε | tan δ(%) |
|---|---|---|---|---|
| 1* | 82.0 | 1.3 | $1.1 \times 10^6$ | 99.0 |
| 2* | 85.0 | 1.8 | $1.5 \times 10^6$ | 92.4 |
| 3* | 80.1 | 2.4 | $1.3 \times 10^6$ | 90.1 |
| 4* | 92.0 | 3.0 | $7.7 \times 10^5$ | 85.7 |
| 5* | 100.3 | 4.1 | $1.3 \times 10^5$ | 88.1 |
| 6* | 46.5 | 5.3 | $1.7 \times 10^4$ | 8.1 |
| 7 | 33.6 | 7.6 | $3.4 \times 10^4$ | 3.8 |
| 8 | 31.8 | 7.8 | $3.9 \times 10^4$ | 3.1 |
| 9 | 30.2 | 7.9 | $4.7 \times 10^4$ | 3.1 |
| 10 | 31.9 | 8.0 | $5.2 \times 10^4$ | 3.1 |

11

TABLE 6 (Cont'd)

| Sample No. | $V_{1mA/mm}(V)$ | $\alpha$ | $\varepsilon$ | $\tan \delta(\%)$ |
|---|---|---|---|---|
| 11* | 53.8 | 6.3 | $8.4\times10^4$ | 8.9 |
| 12 | 40.4 | 7.9 | $5.2\times10^4$ | 4.0 |
| 13 | 42.8 | 8.3 | $6.1\times10^4$ | 3.7 |
| 14 | 57.0 | 8.7 | $4.7\times10^4$ | 3.6 |
| 15 | 69.1 | 9.6 | $4.3\times10^4$ | 3.1 |
| 16* | 203.0 | 7.3 | $2.1\times10^3$ | 1.1 |
| 17 | 31.7 | 7.4 | $4.9\times10^4$ | 3.4 |
| 18 | 27.5 | 7.9 | $5.5\times10^4$ | 3.4 |
| 19 | 41.3 | 8.5 | $5.4\times10^4$ | 3.2 |
| 20 | 38.4 | 8.9 | $4.9\times10^4$ | 3.2 |
| 21 | 35.3 | 9.1 | $4.8\times10^4$ | 3.1 |
| 22 | 30.7 | 9.4 | $4.8\times10^4$ | 3.1 |
| 23 | 37.1 | 9.6 | $4.4\times10^4$ | 3.1 |
| 24 | 40.4 | 9.1 | $6.5\times10^4$ | 2.8 |
| 25 | 37.0 | 8.5 | $5.7\times10^4$ | 3.5 |
| 26 | 39.0 | 9.4 | $6.9\times10^4$ | 3.0 |
| 27 | 40.2 | 9.1 | $6.1\times10^4$ | 3.4 |
| 28 | 55.1 | 10.3 | $4.8\times10^4$ | 2.8 |
| 29 | 45.0 | 9.7 | $4.7\times10^4$ | 3.2 |
| 30 | 47.2 | 9.4 | $4.3\times10^4$ | 3.3 |
| 31* | 206.7 | 9.0 | $1.9\times10^3$ | 2.9 |
| 32 | 34.3 | 9.1 | $6.8\times10^4$ | 2.9 |
| 33 | 41.0 | 9.4 | $6.2\times10^4$ | 2.8 |
| 34 | 47.2 | 9.8 | $5.1\times10^4$ | 2.7 |
| 35 | 48.0 | 9.7 | $4.4\times10^4$ | 2.8 |
| 36 | 57.8 | 9.5 | $4.3\times10^4$ | 2.7 |
| 37* | 101.1 | 8.2 | $4.9\times10^4$ | 4.0 |

Marked * are comparison examples which are outside the scope of Claims 1 and 2, respectively.

Example 4

After taking $SrCO_3$ and $TiO_2$ in such a manner that $SrTiO_3$ having a Sr/Ti atom ratio of 0.98 is obtained, they are blended and ground for 12 hours by wet method in a ball-mill or the like and dried. Then, the mixture is again ground, and thereafter, the ground powder is press-formed into a disk having a diameter of 80 mm and a thickness of 50 mm by a pressing force of 98.1 MPa (1.0 ton/cm²). The press-formed body then is calcined at 1200°C for 4 hours, and further ground in a ball-mill or the like for about 20 hours, thereby to prepapre a host material powder of $SrTiO_3$.

Next, $SrTiO_3$, $Y_2O_3$, $Co_2O_3$, CuO, $Ag_2O$ and $ZrO_2$, and further, one of $B_2O_3$, NiO, $MoO_3$, BeO, $Fe_2O_3$, $Al_2O_3$, $Li_2O$, $Cr_2O_3$, PbO, CaO, $TiO_2$, $P_2O_5$, $Sb_2O_3$, $V_2O_5$ are added in composition ratios shown in Table 7, and press-formed and fired in the same manner as in Example 1. And the resulting element was measured under similar conditions as those of Example 1, and the results are shown in Table 8.

TABLE 7

| Sample No. | Composition ratio (mol%) | | | | | | | |
|---|---|---|---|---|---|---|---|---|
| | $SrTiO_3$ | $Y_2O_3$ | $Co_2O_3$ | CuO | $Ag_2O$ | $ZrO_2$ | Additive | |
| 1* | 99.999 | 0.001 | — | — | — | — | — | |
| 2* | 99.998 | 0.001 | 0.001 | — | — | — | — | |
| 3* | 99.997 | 0.001 | 0.001 | 0.001 | — | — | — | |
| 4* | 99.996 | 0.001 | 0.001 | 0.001 | 0.001 | — | — | |
| 5 | 99.995 | 0.001 | 0.001 | 0.001 | 0.001 | 0.001 | — | |
| 6 | 99.986 | 0.010 | 0.001 | 0.001 | 0.001 | 0.001 | — | |
| 7 | 99.896 | 0.100 | 0.001 | 0.001 | 0.001 | 0.001 | — | |
| 8 | 98.996 | 1.000 | 0.001 | 0.001 | 0.001 | 0.001 | — | |
| 9 | 97.996 | 2.000 | 0.001 | 0.001 | 0.001 | 0.001 | — | |
| 10* | 95.996 | 4.000 | 0.001 | 0.001 | 0.001 | 0.001 | — | |
| 11 | 99.397 | 0.500 | 0.100 | 0.001 | 0.001 | 0.001 | — | |
| 12 | 98.497 | 0.500 | 1.000 | 0.001 | 0.001 | 0.001 | — | |
| 13 | 97.497 | 0.500 | 2.000 | 0.001 | 0.001 | 0.001 | — | |
| 14* | 95.497 | 0.500 | 4.000 | 0.001 | 0.001 | 0.001 | — | |
| 15 | 99.298 | 0.500 | 0.100 | 0.100 | 0.001 | 0.001 | — | |
| 16 | 98.398 | 0.500 | 0.100 | 1.000 | 0.001 | 0.001 | — | |
| 17* | 97.398 | 0.500 | 0.100 | 2.000 | 0.001 | 0.001 | — | |
| 18 | 99.199 | 0.500 | 0.100 | 0.100 | 0.100 | 0.001 | — | |
| 19 | 98.299 | 0.500 | 0.100 | 0.100 | 1.000 | 0.001 | — | |
| 20* | 97.299 | 0.500 | 0.100 | 0.100 | 2.000 | 0.001 | — | |
| 21 | 99.100 | 0.500 | 0.100 | 0.100 | 0.100 | 0.100 | — | |
| 22 | 98.200 | 0.500 | 0.100 | 0.100 | 0.100 | 1.000 | — | |
| 23* | 97.200 | 0.500 | 0.100 | 0.100 | 0.100 | 2.000 | — | |
| 24 | 98.899 | 0.500 | 0.100 | 0.100 | 0.100 | 0.300 | $B_2O_3$ | 0.001 |
| 25 | 98.899 | 0.500 | 0.100 | 0.100 | 0.100 | 0.300 | NiO | 0.001 |
| 26 | 98.800 | 0.500 | 0.100 | 0.100 | 0.100 | 0.300 | $MoO_3$ | 0.100 |

13

# 0 157 276

TABLE 7 (Cont'd)

| Sample No. | Composition ratio (mol%) | | | | | | | |
|---|---|---|---|---|---|---|---|---|
| | $SrTiO_3$ | $Y_2O_3$ | $Co_2O_3$ | CuO | $Ag_2O$ | $ZrO_2$ | Additive | |
| 27 | 98.800 | 0.500 | 0.100 | 0.100 | 0.100 | 0.300 | $Fe_2O_3$ | 0.100 |
| 28 | 97.900 | 0.500 | 0.100 | 0.100 | 0.100 | 0.300 | $Al_2O_3$ | 1.000 |
| 29 | 97.900 | 0.500 | 0.100 | 0.100 | 0.100 | 0.300 | $Li_2O_3$ | 1.000 |
| 30 | 96.900 | 0.500 | 0.100 | 0.100 | 0.100 | 0.300 | CaO | 2.000 |
| 31 | 96.900 | 0.500 | 0.100 | 0.100 | 0.100 | 0.300 | $TiO_2$ | 2.000 |
| 32* | 94.900 | 0.500 | 0.100 | 0.100 | 0.100 | 0.300 | $B_2O_3$ | 4.000 |
| 33 | 98.790 | 0.500 | 0.100 | 0.100 | 0.100 | 0.300 | $B_2O_3$<br>$Fe_2O_3$ | 0.010<br>0.100 |
| 34 | 98.645 | 0.500 | 0.100 | 0.100 | 0.100 | 0.300 | $Al_2O_3$<br>$Li_2O$<br>CaO<br>$TiO_2$ | 0.100<br>0.005<br>0.100<br>0.050 |
| 35 | 98.500 | 0.500 | 0.100 | 0.100 | 0.100 | 0.300 | $Cr_2O_3$<br>BeO | 0.100<br>0.300 |
| 36 | 98.590 | 0.500 | 0.100 | 0.100 | 0.100 | 0.300 | $MoO_3$<br>$P_2O_5$ | 0.300<br>0.010 |
| 37 | 98.650 | 0.500 | 0.100 | 0.100 | 0.100 | 0.300 | $Li_2O$<br>$Al_2O_3$ | 0.050<br>0.200 |
| 38* | 96.400 | 0.500 | 0.100 | 0.100 | 0.100 | 0.300 | NiO<br>$Fe_2O_3$<br>CaO | 0.500<br>1.000<br>1.000 |

Marked * are comparison examples which are outside the scope of Claims 7 and 8, respectively.

TABLE 8

| Sample No. | $V_{1mA/mm}(V)$ | $\alpha$ | $\varepsilon$ | tan $\delta(\%)$ |
|---|---|---|---|---|
| 1* | 83.0 | 1.3 | $1.0 \times 10^5$ | 94.0 |
| 2* | 50.6 | 6.0 | $1.9 \times 10^4$ | 7.4 |
| 3* | 35.2 | 6.2 | $3.1 \times 10^4$ | 6.0 |
| 4* | 39.7 | 6.5 | $4.0 \times 10^4$ | 5.4 |
| 5 | 50.1 | 7.7 | $5.0 \times 10^4$ | 3.0 |
| 6 | 48.7 | 7.6 | $5.2 \times 10^4$ | 2.9 |
| 7 | 45.9 | 7.8 | $5.4 \times 10^4$ | 2.8 |
| 8 | 60.0 | 8.0 | $5.3 \times 10^4$ | 3.0 |
| 9 | 75.5 | 8.5 | $4.2 \times 10^4$ | 2.9 |
| 10* | 195.0 | 10.7 | $1.1 \times 10^3$ | 2.9 |

14

# 0 157 276

TABLE 8 (Cont'd)

| Sample No. | $V_{1mA/mm}(V)$ | $\alpha$ | $\varepsilon$ | tan $\delta$(%) |
|---|---|---|---|---|
| 11 | 54.0 | 8.1 | $4.9 \times 10^4$ | 3.1 |
| 12 | 47.2 | 8.0 | $5.0 \times 10^4$ | 3.0 |
| 13 | 44.5 | 8.0 | $5.7 \times 10^4$ | 3.2 |
| 14* | 56.2 | 4.7 | $7.0 \times 10^4$ | 14.7 |
| 15 | 53.4 | 7.6 | $3.9 \times 10^4$ | 2.9 |
| 16 | 88.7 | 8.4 | $3.8 \times 10^4$ | 2.7 |
| 17* | 203.1 | 10.5 | $1.6 \times 10^3$ | 1.1 |
| 18 | 60.5 | 8.3 | $4.0 \times 10^4$ | 3.3 |
| 19 | 89.7 | 11.0 | $3.1 \times 10^4$ | 3.0 |
| 20* | 601.2 | 13.2 | $1.0 \times 10^3$ | 0.9 |
| 21 | 52.7 | 7.6 | $5.9 \times 10^4$ | 2.7 |
| 22 | 84.7 | 9.2 | $4.3 \times 10^4$ | 2.6 |
| 23* | 89.5 | 5.1 | $2.9 \times 10^4$ | 12.7 |
| 24 | 55.0 | 9.4 | $3.8 \times 10^4$ | 2.8 |
| 25 | 47.2 | 9.3 | $4.9 \times 10^4$ | 2.6 |
| 26 | 50.3 | 9.5 | $5.0 \times 10^4$ | 2.7 |
| 27 | 71.5 | 9.5 | $5.0 \times 10^4$ | 2.6 |
| 28 | 85.4 | 10.2 | $4.1 \times 10^4$ | 2.8 |
| 29 | 79.0 | 10.2 | $4.0 \times 10^4$ | 2.8 |
| 30 | 98.1 | 10.2 | $4.1 \times 10^4$ | 2.9 |
| 31 | 90.4 | 10.3 | $1.0 \times 10^4$ | 2.7 |
| 32* | 207.6 | 3.8 | $1.0 \times 10^3$ | 7.9 |
| 33 | 59.7 | 9.1 | $4.0 \times 10^4$ | 2.9 |
| 34 | 75.2 | 9.3 | $4.1 \times 10^4$ | 2.6 |
| 35 | 77.1 | 10.1 | $4.2 \times 10^4$ | 2.5 |
| 36 | 40.5 | 9.2 | $4.5 \times 10^4$ | 3.1 |
| 37 | 63.3 | 9.8 | $3.9 \times 10^4$ | 3.0 |
| 38* | 259.0 | 10.4 | $1.1 \times 10^3$ | 1.1 |

Marked * are comparison examples which are outside the scope of Claims 7 and 8, respectively.

Example 5

After taking $SrCO_3$ and $TiO_2$ in such a manner that $SrTiO_3$ having a Sr/Ti atom ratio of 0.98 is obtained,

15

**0 157 276**

they are blended and ground for 12 hours by wet method in a ball-mill or the like and dried. Then, the mixture is again ground, and thereafter, the ground powder is press-formed into a disk of a diameter of 80 mm and a thickness of 50 mm by a pressing force of 98.1 MPa (1.0 ton/cm$^2$). The press-formed body then is calcined at 1200°C for 4 hours, and further ground by a ball-mill or the like for about 20 hours, thereby to prepare a host material powder of SrTiO$_3$.

Next, SrTiO$_3$, Y$_2$O$_3$, Co$_2$O$_3$, CuO, Ag$_2$O and BaO, and further, one of B$_2$O$_3$, NiO, MoO$_3$, BeO, Fe$_2$O$_3$, Al$_2$O$_3$, Li$_2$O, Cr$_2$O$_3$, PbO, CaO, TiO$_2$, P$_2$O$_5$, Sb$_2$O$_3$ and V$_2$O$_5$ are added in composition ratios shown in Table 9, and press-foremd and fired in the same manner as in Example 1. And the resulting element was measured under similar conditions as those of Example 1, and the results are shown in Table 10.

TABLE 9

| Sample No. | Composition ratio (mol%) | | | | | | |
|---|---|---|---|---|---|---|---|
| | SrTiO$_3$ | Y$_2$O$_3$ | Co$_2$O$_3$ | CuO | Ag$_2$O | BaO | Additive |
| 1* | 99.999 | 0.001 | — | — | — | — | — |
| 2* | 99.998 | 0.001 | 0.001 | — | — | — | — |
| 3* | 99.997 | 0.001 | 0.001 | 0.001 | — | — | — |
| 4* | 99.996 | 0.001 | 0.001 | 0.001 | 0.001 | — | — |
| 5 | 99.995 | 0.001 | 0.001 | 0.001 | 0.001 | 0.001 | — |
| 6 | 99.986 | 0.010 | 0.001 | 0.001 | 0.001 | 0.001 | — |
| 7 | 99.896 | 0.100 | 0.001 | 0.001 | 0.001 | 0.001 | — |
| 8 | 98.996 | 1.000 | 0.001 | 0.001 | 0.001 | 0.001 | — |
| 9 | 97.996 | 2.000 | 0.001 | 0.001 | 0.001 | 0.001 | — |
| 10* | 95.996 | 4.000 | 0.001 | 0.001 | 0.001 | 0.001 | — |
| 11 | 99.397 | 0.500 | 0.100 | 0.001 | 0.001 | 0.001 | — |
| 12 | 98.497 | 0.500 | 1.000 | 0.001 | 0.001 | 0.001 | — |
| 13 | 97.497 | 0.500 | 2.000 | 0.001 | 0.001 | 0.001 | — |
| 14* | 95.497 | 0.500 | 4.000 | 0.001 | 0.001 | 0.001 | — |
| 15 | 99.298 | 0.500 | 0.100 | 0.100 | 0.001 | 0.001 | — |
| 16 | 98.398 | 0.500 | 0.100 | 1.000 | 0.001 | 0.001 | — |
| 17* | 97.398 | 0.500 | 0.100 | 2.000 | 0.001 | 0.001 | — |
| 18 | 99.199 | 0.500 | 0.100 | 0.100 | 0.100 | 0.001 | — |
| 19 | 98.299 | 0.500 | 0.100 | 0.100 | 1.000 | 0.001 | — |
| 20* | 97.299 | 0.500 | 0.100 | 0.100 | 2.000 | 0.001 | — |
| 21 | 99.100 | 0.500 | 0.100 | 0.100 | 0.100 | 0.100 | — |
| 22 | 98.200 | 0.500 | 0.100 | 0.100 | 0.100 | 1.000 | — |
| 23* | 97.200 | 0.500 | 0.100 | 0.100 | 0.100 | 2.000 | — |
| 24 | 98.899 | 0.500 | 0.100 | 0.100 | 0.100 | 0.300 | B$_2$O$_3$  0.001 |
| 25 | 98.899 | 0.500 | 0.100 | 0.100 | 0.100 | 0.300 | NiO  0.001 |

16

TABLE 9 (Cont'd)

| Sample No. | Composition ratio (mol%) | | | | | | | |
|---|---|---|---|---|---|---|---|---|
| | $SrTiO_3$ | $Y_2O_3$ | $Co_2O_3$ | CuO | $Ag_2O$ | BaO | Additive | |
| 26 | 98.800 | 0.500 | 0.100 | 0.100 | 0.100 | 0.300 | $MoO_3$ | 0.001 |
| 27 | 98.800 | 0.500 | 0.100 | 0.100 | 0.100 | 0.300 | $Fe_2O_3$ | 0.100 |
| 28 | 97.900 | 0.500 | 0.100 | 0.100 | 0.100 | 0.300 | $Al_2O_3$ | 1.000 |
| 29 | 97.900 | 0.500 | 0.100 | 0.100 | 0.100 | 0.300 | $Li_2O$ | 1.000 |
| 30 | 96.900 | 0.500 | 0.100 | 0.100 | 0.100 | 0.300 | CaO | 2.000 |
| 31 | 96.900 | 0.500 | 0.100 | 0.100 | 0.100 | 0.300 | $TiO_2$ | 2.000 |
| 32* | 94.900 | 0.500 | 0.100 | 0.100 | 0.100 | 0.300 | $B_2O_3$ | 4.000 |
| 33 | 98.790 | 0.500 | 0.100 | 0.100 | 0.100 | 0.300 | $B_2O_3$<br>$Fe_2O_3$ | 0.010<br>0.100 |
| 34 | 98.645 | 0.500 | 0.100 | 0.100 | 0.100 | 0.300 | $Al_2O_3$<br>$Li_2O$<br>CaO<br>$TiO_2$ | 0.100<br>0.005<br>0.100<br>0.050 |
| 35 | 98.500 | 0.500 | 0.100 | 0.100 | 0.100 | 0.300 | $Fe_2O_3$<br>$V_2O_5$ | 0.100<br>0.300 |
| 36 | 98.590 | 0.500 | 0.100 | 0.100 | 0.100 | 0.300 | BeO<br>$P_2O_5$ | 0.300<br>0.010 |
| 37 | 98.650 | 0.500 | 0.100 | 0.100 | 0.100 | 0.300 | $Cr_2O_3$<br>$TiO_2$ | 0.050<br>0.200 |
| 38* | 96.400 | 0.500 | 0.100 | 0.100 | 0.100 | 0.300 | $MoO_3$<br>$Sb_2O_3$<br>$Al_2O_3$ | 0.500<br>1.000<br>1.000 |

Marked * are comparison examples which are outside the scope of Claims 7 and 8, respectively.

TABLE 10

| Sample No. | $V_{1mA/mm}$(V) | α | ε | tan δ(%) |
|---|---|---|---|---|
| 1* | 83.0 | 1.3 | $1.0 \times 10^6$ | 94.0 |
| 2* | 50.6 | 6.0 | $1.9 \times 10^4$ | 7.4 |
| 3* | 35.2 | 6.2 | $3.1 \times 10^4$ | 6.0 |
| 4* | 39.7 | 6.5 | $4.0 \times 10^4$ | 5.4 |
| 5 | 40.0 | 7.2 | $6.5 \times 10^4$ | 3.1 |
| 6 | 37.8 | 7.1 | $6.6 \times 10^4$ | 3.0 |
| 7 | 39.5 | 7.3 | $6.9 \times 10^4$ | 3.0 |
| 8 | 51.1 | 7.6 | $6.7 \times 10^4$ | 3.0 |
| 9 | 60.7 | 8.4 | $5.8 \times 10^4$ | 3.0 |

17

# 0 157 276

TABLE 10 (Cont'd)

| Sample No. | $V_{1mA/mm}$(V) | $\alpha$ | $\varepsilon$ | tan $\delta$(%) |
|---|---|---|---|---|
| 10* | 158.9 | 10.1 | $1.2\times10^3$ | 3.0 |
| 11 | 44.2 | 7.9 | $5.8\times10^4$ | 3.1 |
| 12 | 39.3 | 7.9 | $6.4\times10^4$ | 3.1 |
| 13 | 35.6 | 8.0 | $7.3\times10^4$ | 3.1 |
| 14* | 45.3 | 4.1 | $8.4\times10^4$ | 16.2 |
| 15 | 45.4 | 7.3 | $5.3\times10^4$ | 2.9 |
| 16 | 78.1 | 8.1 | $5.1\times10^4$ | 2.8 |
| 17* | 185.3 | 10.2 | $1.3\times10^3$ | 1.5 |
| 18 | 50.9 | 8.0 | $5.5\times10^4$ | 3.5 |
| 19 | 77.9 | 10.6 | $4.9\times10^4$ | 3.0 |
| 20* | 420.2 | 11.9 | $1.1\times10^3$ | 1.0 |
| 21 | 40.5 | 7.2 | $6.4\times10^4$ | 2.9 |
| 22 | 75.3 | 8.9 | $5.7\times10^4$ | 2.9 |
| 23* | 80.9 | 4.6 | $3.0\times10^4$ | 16.4 |
| 24 | 47.5 | 9.2 | $4.5\times10^4$ | 3.0 |
| 25 | 39.3 | 9.3 | $4.9\times10^4$ | 2.9 |
| 26 | 40.4 | 9.3 | $5.8\times10^4$ | 2.9 |
| 27 | 65.2 | 9.3 | $6.1\times10^4$ | 2.8 |
| 28 | 74.9 | 10.0 | $5.7\times10^4$ | 2.8 |
| 29 | 69.8 | 10.1 | $5.5\times10^4$ | 2.9 |
| 30 | 89.4 | 10.2 | $5.5\times10^4$ | 2.8 |
| 31 | 80.8 | 10.3 | $1.4\times10^4$ | 2.8 |
| 32* | 157.6 | 3.7 | $1.0\times10^3$ | 9.1 |
| 33 | 42.0 | 9.0 | $5.2\times10^4$ | 3.0 |
| 34 | 69.2 | 9.1 | $5.3\times10^4$ | 2.9 |
| 35 | 69.9 | 9.8 | $5.7\times10^4$ | 2.4 |
| 36 | 35.3 | 9.0 | $5.1\times10^4$ | 3.1 |
| 37 | 57.8 | 9.4 | $4.3\times10^4$ | 3.1 |
| 38* | 191.6 | 10.1 | $1.0\times10^3$ | 1.7 |

Marked * are comparison examples which are outside the scope of Claims 7 and 8, respectively.

18

# 0 157 276

Example 6

After taking $SrCO_3$ and $TiO_2$ in such a manner that $SrTiO_3$ having a Sr/Ti atom ratio of 0.98 is obtained, they are blended and ground for 12 hours by wet method in a ball-mill or the like and dried. Then, the mixture is again ground, and thereafter, the ground powder is press-formed into a disk of a diameter of 80 mm and a thickness of 50 mm by a pressing force of 98.1 MPa (1.0 ton/cm²). The press-formed body than is calcined at 1200°C for 4 hours, and further ground in a ball-mill of the like for about 20 hours, thereby to prepare a host material powder of $SrTiO_3$.

Next, $SrTiO_3$, $Y_2O_3$, $Co_2O_3$, CuO, $Ag_2O$ and $SiO_2$, and further, one of $B_2O_3$, $MnO_2$, NiO, $MoO_3$, BeO, $Fe_2O_3$, $Al_2O_3$, $Li_2O$, $Cr_2O_3$, $ZrO_2$, PbO, BaO, CaO, MgO, $TiO_2$, ZnO, $P_2O_5$, $Sb_2O_3$ and $V_2O_5$ are added in composition ratios shown in Table 11, and press-formed and fired in the same manner as in Example 1. And the resultant element was measured under similar conditions as those of Example 1, and the results are shown in Table 12.

TABLE 11

| Sample No. | Composition ratio (mol%) | | | | | | |
|---|---|---|---|---|---|---|---|
| | $SrTiO_3$ | $Y_2O_3$ | $Co_2O_3$ | CuO | $Ag_2O$ | $SiO_2$ | Additive |
| 1* | 99.999 | 0.001 | — | — | — | — | — |
| 2* | 99.998 | 0.001 | 0.001 | — | — | — | — |
| 3* | 99.997 | 0.001 | 0.001 | 0.001 | — | — | — |
| 4* | 99.996 | 0.001 | 0.001 | 0.001 | 0.001 | — | — |
| 5 | 99.995 | 0.001 | 0.001 | 0.001 | 0.001 | 0.001 | — |
| 6 | 99.986 | 0.010 | 0.001 | 0.001 | 0.001 | 0.001 | — |
| 7 | 99.896 | 0.100 | 0.001 | 0.001 | 0.001 | 0.001 | — |
| 8 | 98.996 | 1.000 | 0.001 | 0.001 | 0.001 | 0.001 | — |
| 9 | 97.996 | 2.000 | 0.001 | 0.001 | 0.001 | 0.001 | — |
| 10* | 95.996 | 4.000 | 0.001 | 0.001 | 0.001 | 0.001 | — |
| 11 | 99.397 | 0.500 | 0.100 | 0.001 | 0.001 | 0.001 | — |
| 12 | 98.497 | 0.500 | 1.000 | 0.001 | 0.001 | 0.001 | — |
| 13 | 97.497 | 0.500 | 2.000 | 0.001 | 0.001 | 0.001 | — |
| 14* | 95.497 | 0.500 | 4.000 | 0.001 | 0.001 | 0.001 | — |
| 15 | 99.298 | 0.500 | 0.100 | 0.100 | 0.001 | 0.001 | — |
| 16 | 98.398 | 0.500 | 0.100 | 1.000 | 0.001 | 0.001 | — |
| 17* | 97.398 | 0.500 | 0.100 | 2.000 | 0.001 | 0.001 | — |
| 18 | 99.199 | 0.500 | 0.100 | 0.100 | 0.100 | 0.001 | — |
| 19 | 98.299 | 0.500 | 0.100 | 0.100 | 1.000 | 0.001 | — |
| 20* | 97.299 | 0.500 | 0.100 | 0.100 | 2.000 | 0.001 | — |
| 21 | 99.100 | 0.500 | 0.100 | 0.100 | 0.100 | 0.100 | — |
| 22 | 98.200 | 0.500 | 0.100 | 0.100 | 0.100 | 1.000 | — |
| 23* | 97.200 | 0.500 | 0.100 | 0.100 | 0.100 | 2.000 | — |

19

# 0 157 276

TABLE 11 (Cont'd)

| Sample No. | Composition ratio (mol%) | | | | | | Additive | |
|---|---|---|---|---|---|---|---|---|
| | SrTiO$_3$ | Y$_2$O$_3$ | Co$_2$O$_3$ | CuO | Ag$_2$O | SiO$_2$ | | |
| 24 | 98.899 | 0.500 | 0.100 | 0.100 | 0.100 | 0.300 | B$_2$O$_3$ | 0.001 |
| 25 | 98.899 | 0.500 | 0.100 | 0.100 | 0.100 | 0.300 | NiO | 0.001 |
| 26 | 98.800 | 0.500 | 0.100 | 0.100 | 0.100 | 0.300 | MoO$_3$ | 0.100 |
| 27 | 98.800 | 0.500 | 0.100 | 0.100 | 0.100 | 0.300 | Fe$_2$O$_3$ | 0.100 |
| 28 | 97.900 | 0.500 | 0.100 | 0.100 | 0.100 | 0.300 | Al$_2$O$_3$ | 1.000 |
| 29 | 97.900 | 0.500 | 0.100 | 0.100 | 0.100 | 0.300 | Li$_2$O | 1.000 |
| 30 | 96.900 | 0.500 | 0.100 | 0.100 | 0.100 | 0.300 | CaO | 2.000 |
| 31 | 96.900 | 0.500 | 0.100 | 0.100 | 0.100 | 0.300 | TiO$_2$ | 2.000 |
| 32* | 94.900 | 0.500 | 0.100 | 0.100 | 0.100 | 0.300 | B$_2$O$_3$ | 4.000 |
| 33 | 98.790 | 0.500 | 0.100 | 0.100 | 0.100 | 0.300 | B$_2$O$_3$<br>Fe$_2$O$_3$ | 0.010<br>0.100 |
| 34 | 98.645 | 0.500 | 0.100 | 0.100 | 0.100 | 0.300 | Al$_2$O$_3$<br>Li$_2$O<br>CaO<br>TiO$_2$ | 0.100<br>0.005<br>0.100<br>0.050 |
| 35 | 98.500 | 0.500 | 0.100 | 0.100 | 0.100 | 0.300 | MnO$_2$<br>Al$_2$O$_3$ | 0.100<br>0.300 |
| 36 | 98.887 | 0.500 | 0.100 | 0.100 | 0.100 | 0.300 | BaO<br>Li$_2$O | 0.010<br>0.003 |
| 37 | 98.500 | 0.500 | 0.100 | 0.100 | 0.100 | 0.300 | Al$_2$O$_3$<br>MgO | 0.100<br>0.300 |
| 38 | 98.400 | 0.500 | 0.100 | 0.100 | 0.100 | 0.300 | TiO$_2$<br>ZrO$_2$<br>MnO$_2$ | 0.050<br>0.150<br>0.300 |
| 39* | 96.390 | 0.500 | 0.100 | 0.100 | 0.100 | 0.300 | MgO<br>MnO$_2$<br>TiO$_2$ | 1.500<br>1.000<br>0.010 |

Marked * are comparison examples which are outside the scope of Claims 7 and 8, respectively.

20

# 0 157 276

TABLE 12

| Sample No. | $V_{1mA/mm}$ (V) | α | ε | tan δ(%) |
|---|---|---|---|---|
| 1* | 83.0 | 1.3 | $1.0\times10^6$ | 91.0 |
| 2* | 50.6 | 6.0 | $1.9\times10^4$ | 7.4 |
| 3* | 35.2 | 6.2 | $3.1\times10^4$ | 6.0 |
| 4* | 39.7 | 6.5 | $4.0\times10^4$ | 5.4 |
| 5 | 43.2 | 7.8 | $6.2\times10^4$ | 3.1 |
| 6 | 41.9 | 7.6 | $6.3\times10^4$ | 3.3 |
| 7 | 40.0 | 7.7 | $6.5\times10^4$ | 3.3 |
| 8 | 52.4 | 7.9 | $5.7\times10^4$ | 3.1 |
| 9 | 70.1 | 8.8 | $5.3\times10^4$ | 2.7 |
| 10* | 155.0 | 9.7 | $2.0\times10^3$ | 2.2 |
| 11 | 40.9 | 7.8 | $5.3\times10^4$ | 3.2 |
| 12 | 37.3 | 7.7 | $5.5\times10^4$ | 3.7 |
| 13 | 38.7 | 7.1 | $6.1\times10^4$ | 4.3 |
| 14* | 45.1 | 5.7 | $8.0\times10^4$ | 28.9 |
| 15 | 47.2 | 7.2 | $4.3\times10^4$ | 3.1 |
| 16 | 89.0 | 8.9 | $4.1\times10^4$ | 2.4 |
| 17* | 304.9 | 11.4 | $1.9\times10^3$ | 1.0 |
| 18 | 52.3 | 8.0 | $4.5\times10^4$ | 2.8 |
| 19 | 94.0 | 10.9 | $4.1\times10^4$ | 2.3 |
| 20* | 909.4 | 15.3 | $1.1\times10^3$ | 0.9 |
| 21 | 49.7 | 8.0 | $6.3\times10^4$ | 3.0 |
| 22 | 80.5 | 9.4 | $5.1\times10^4$ | 2.7 |
| 23* | 84.9 | 6.9 | $2.8\times10^4$ | 11.5 |
| 24 | 51.3 | 9.7 | $3.9\times10^4$ | 3.2 |
| 25 | 40.9 | 9.2 | $5.3\times10^4$ | 3.5 |
| 26 | 43.4 | 9.5 | $5.5\times10^4$ | 3.4 |
| 27 | 62.1 | 9.5 | $4.7\times10^4$ | 2.7 |
| 28 | 75.5 | 10.1 | $4.2\times10^4$ | 2.4 |
| 29 | 74.0 | 10.0 | $4.3\times10^4$ | 2.1 |
| 30 | 97.1 | 10.3 | $3.8\times10^4$ | 2.2 |
| 31 | 88.8 | 10.5 | $3.5\times10^4$ | 2.3 |

21

# 0 157 276

TABLE 12 (Cont'd)

| Sample No. | $V_{1mA/mm}$ (V) | α | ε | tan δ(%) |
|---|---|---|---|---|
| 32* | 210.4 | 4.1 | $1.7\times10^3$ | 3.9 |
| 33 | 55.1 | 9.1 | $4.3\times10^4$ | 2.2 |
| 34 | 70.8 | 9.7 | $5.0\times10^4$ | 2.0 |
| 35 | 75.0 | 10.9 | $4.9\times10^4$ | 2.0 |
| 36 | 54.0 | 9.2 | $5.7\times10^4$ | 2.9 |
| 37 | 64.3 | 9.5 | $5.5\times10^4$ | 2.7 |
| 38 | 102.5 | 10.8 | $3.9\times10^4$ | 1.5 |
| 39* | 899.0 | 16.5 | $1.0\times10^3$ | 0.8 |

Marked * are comparison examples which are outside the scope of Claims 7 and 8, respectively.

Example 7

After taking $SrCO_3$ and $TiO_2$ in such a manner that $SrTiO_3$ having a Sr/Ti atom ratio of 0.98 is obtained, they are blended and ground for 12 hours by wet method in a ball-mill or the like and dried. Then, the mixture is again ground, and thereafter, the ground powder is press-formed into a disk having a diameter of 80 mm and a thickness of 50 mm by a pressing force of 98.1 MPa (1.0 ton/cm$^2$). The press-formed body then is calcined at 1200°C for 4 hours, and further ground by a ball-mill or the like for about 20 hours, thereby to prepare a host material powder of $SrTiO_3$.

Next, $SrTiO_3$, $Y_2O_3$, $Co_2O_3$, CuO, $Ag_2O$ and $SiO_2$, and further, one of $B_2O_3$, $MnO_2$, NiO, $MoO_3$, BeO, $Fe_2O_3$, $Al_2O_3$, $Li_2O$, $Cr_2O_3$, $ZrO_2$, PbO, BaO, CaO, MgO, $TiO_2$, ZnO, $P_2O_5$, $Sb_2O_3$ and $V_2O_5$ are added in composition ratios shown in Table 13, and press-formed and fired in the same manner as in Example 1. And the resulting element was measured under similar conditions as those of Example 1, and the results are shown in Table 14.

TABLE 13

| Sample No. | Comparison ratio (mol%) | | | | | | | |
|---|---|---|---|---|---|---|---|---|
| | SrTiO$_3$ | Y$_2$O$_3$ | Co$_2$O$_3$ | CuO | Ag$_2$O | MgO | Additive | |
| 1* | 99.999 | 0.001 | — | — | — | — | — | |
| 2* | 99.998 | 0.001 | 0.001 | — | — | — | — | |
| 3* | 99.997 | 0.001 | 0.001 | 0.001 | — | — | — | |
| 4* | 99.996 | 0.001 | 0.001 | 0.001 | 0.001 | — | — | |
| 5 | 99.995 | 0.001 | 0.001 | 0.001 | 0.001 | 0.001 | — | |
| 6 | 99.986 | 0.010 | 0.001 | 0.001 | 0.001 | 0.001 | — | |
| 7 | 99.896 | 0.100 | 0.001 | 0.001 | 0.001 | 0.001 | — | |
| 8 | 98.996 | 1.000 | 0.001 | 0.001 | 0.001 | 0.001 | — | |
| 9 | 97.996 | 2.000 | 0.001 | 0.001 | 0.001 | 0.001 | — | |
| 10* | 95.996 | 4.000 | 0.001 | 0.001 | 0.001 | 0.001 | — | |
| 11 | 99.397 | 0.500 | 0.100 | 0.001 | 0.001 | 0.001 | — | |
| 12 | 98.497 | 0.500 | 1.000 | 0.001 | 0.001 | 0.001 | — | |
| 13 | 97.497 | 0.500 | 2.000 | 0.001 | 0.001 | 0.001 | — | |
| 14* | 95.497 | 0.500 | 4.000 | 0.001 | 0.001 | 0.001 | — | |
| 15 | 99.298 | 0.500 | 0.100 | 0.100 | 0.001 | 0.001 | — | |
| 16 | 98.398 | 0.500 | 0.100 | 1.000 | 0.001 | 0.001 | — | |
| 17* | 97.398 | 0.500 | 0.100 | 2.000 | 0.001 | 0.001 | — | |
| 18 | 99.199 | 0.500 | 0.100 | 0.100 | 0.100 | 0.001 | — | |
| 19 | 98.299 | 0.500 | 0.100 | 0.100 | 1.000 | 0.001 | — | |
| 20* | 97.299 | 0.500 | 0.100 | 0.100 | 2.000 | 0.001 | — | |
| 21 | 99.100 | 0.500 | 0.100 | 0.100 | 0.100 | 0.100 | — | |
| 22 | 98.200 | 0.500 | 0.100 | 0.100 | 0.100 | 1.000 | — | |
| 23* | 97.200 | 0.500 | 0.100 | 0.100 | 0.100 | 2.000 | — | |
| 24 | 98.899 | 0.500 | 0.100 | 0.100 | 0.100 | 0.300 | B$_2$O$_3$ | 0.001 |
| 25 | 98.899 | 0.500 | 0.100 | 0.100 | 0.100 | 0.300 | NiO | 0.001 |
| 26 | 98.800 | 0.500 | 0.100 | 0.100 | 0.100 | 0.300 | MoG$_3$ | 0.100 |
| 27 | 98.800 | 0.500 | 0.100 | 0.100 | 0.100 | 0.300 | Fe$_2$O$_3$ | 0.100 |
| 28 | 97.900 | 0.500 | 0.100 | 0.100 | 0.100 | 0.300 | Al$_2$O$_3$ | 1.000 |
| 29 | 97.900 | 0.500 | 0.100 | 0.100 | 0.100 | 0.300 | Li$_2$O | 1.000 |
| 30 | 96.900 | 0.500 | 0.100 | 0.100 | 0.100 | 0.300 | CaO | 2.000 |

TABLE 13 (Cont'd)

| Sample No. | Comparison ratio (mol%) | | | | | | | |
|---|---|---|---|---|---|---|---|---|
| | SrTiO$_3$ | Y$_2$O$_3$ | Co$_2$O$_3$ | CuO | Ag$_2$O | MgO | Additive | |
| 31 | 96.900 | 0.500 | 0.100 | 0.100 | 0.100 | 0.300 | TiO$_2$ | 2.000 |
| 32* | 94.900 | 0.500 | 0.100 | 0.100 | 0.100 | 0.300 | B$_2$O$_3$ | 4.000 |
| 33 | 98.790 | 0.500 | 0.100 | 0.100 | 0.100 | 0.300 | B$_2$O$_3$<br>Fe$_2$O$_3$ | 0.010<br>0.100 |
| 34 | 98.645 | 0.500 | 0.100 | 0.100 | 0.100 | 0.300 | Al$_2$O$_3$<br>Li$_2$O<br>CaO<br>TiO$_2$ | 0.100<br>0.005<br>0.100<br>0.050 |
| 35 | 98.300 | 0.500 | 0.100 | 0.100 | 0.100 | 0.300 | V$_2$O$_5$<br>CaO | 0.100<br>0.500 |
| 36 | 98.350 | 0.500 | 0.100 | 0.100 | 0.100 | 0.300 | Sb$_2$O$_3$<br>TiO$_2$ | 0.050<br>0.500 |
| 37 | 98.100 | 0.500 | 0.100 | 0.100 | 0.100 | 0.300 | NiO<br>Al$_2$O$_3$ | 0.300<br>0.500 |
| 38* | 96.795 | 0.500 | 0.100 | 0.100 | 0.100 | 0.300 | BeO<br>Cr$_2$O$_3$<br>CaO | 0.005<br>1.100<br>1.000 |

Marked * are comparison examples which are outside the scope of Claims 7 and 8, respectively.

TABLE 14

| Sample No. | V$_{1mA/mm}$(V) | α | ε | tan δ(%) |
|---|---|---|---|---|
| 1* | 83.0 | 1.3 | $1.0 \times 10^6$ | 94.0 |
| 2* | 50.6 | 6.0 | $1.9 \times 10^4$ | 7.4 |
| 3* | 35.2 | 6.2 | $3.1 \times 10^4$ | 6.0 |
| 4* | 39.7 | 6.5 | $4.0 \times 10^4$ | 5.4 |
| 5 | 48.1 | 7.5 | $4.9 \times 10^4$ | 2.9 |
| 6 | 46.5 | 7.7 | $5.1 \times 10^4$ | 2.8 |
| 7 | 43.8 | 7.8 | $5.2 \times 10^4$ | 2.7 |
| 8 | 55.7 | 8.1 | $5.3 \times 10^4$ | 2.9 |
| 9 | 73.6 | 8.4 | $4.3 \times 10^4$ | 2.8 |
| 10* | 181.0 | 9.8 | $1.0 \times 10^3$ | 2.8 |
| 11 | 51.5 | 8.2 | $4.8 \times 10^4$ | 2.8 |
| 12 | 45.3 | 8.2 | $5.1 \times 10^4$ | 2.8 |
| 13 | 41.6 | 8.1 | $5.6 \times 10^4$ | 2.9 |
| 14* | 55.0 | 4.4 | $6.1 \times 10^4$ | 11.5 |

TABLE 14 (Cont'd)

| Sample No. | $V_{1mA/mm}(V)$ | $\alpha$ | $\varepsilon$ | tan $\delta$(%) |
|---|---|---|---|---|
| 15 | 52.2 | 7.7 | $4.2 \times 10^4$ | 2.7 |
| 16 | 87.8 | 8.3 | $4.1 \times 10^4$ | 2.5 |
| 17* | 180.5 | 10.2 | $1.3 \times 10^3$ | 0.7 |
| 18 | 58.3 | 8.1 | $4.2 \times 10^4$ | 2.9 |
| 19 | 87.7 | 10.7 | $3.9 \times 10^4$ | 2.9 |
| 20* | 349.1 | 12.9 | $1.1 \times 10^3$ | 0.9 |
| 21 | 50.5 | 7.2 | $5.7 \times 10^4$ | 2.5 |
| 22 | 82.2 | 9.0 | $4.1 \times 10^4$ | 2.4 |
| 23* | 85.8 | 5.2 | $1.9 \times 10^4$ | 11.9 |
| 24 | 54.1 | 9.2 | $3.9 \times 10^4$ | 1.8 |
| 25 | 42.3 | 9.3 | $4.7 \times 10^4$ | 1.4 |
| 26 | 47.8 | 9.4 | $4.9 \times 10^4$ | 1.7 |
| 27 | 65.6 | 9.5 | $5.0 \times 10^4$ | 1.8 |
| 28 | 80.5 | 10.0 | $4.2 \times 10^4$ | 1.5 |
| 29 | 66.3 | 10.0 | $4.1 \times 10^4$ | 1.7 |
| 30 | 93.4 | 10.1 | $4.1 \times 10^4$ | 1.4 |
| 31 | 84.4 | 10.0 | $1.0 \times 10^4$ | 1.4 |
| 32* | 172.3 | 2.4 | $1.0 \times 10^3$ | 9.5 |
| 33 | 57.2 | 9.0 | $4.1 \times 10^4$ | 2.0 |
| 34 | 81.8 | 9.2 | $4.1 \times 10^4$ | 1.7 |
| 35 | 55.3 | 10.2 | $4.4 \times 10^4$ | 1.8 |
| 36 | 70.4 | 10.3 | $4.7 \times 10^4$ | 1.4 |
| 37 | 78.5 | 10.5 | $4.3 \times 10^4$ | 1.4 |
| 38* | 241.9 | 11.7 | $1.1 \times 10^3$ | 0.9 |

Marked * are comparison examples which are outside the scope of Claims 7 and 8, respectively.

Example 8

After taking $SrCO_3$ and $TiO_2$ in such a manner that $SrTiO_3$ having a Sr/Ti atom ratio of 0.98 is obtained, they are blended and ground for 12 hours by wet method in a ball-mill or the like and dried. Then, the mixture is again ground, and thereafter, the ground powder is press-formed into a disk having a diameter of 80 mm and a thickness of 50 mm by a pressing force of 98.1 MPa (1.0 ton/cm²). The press-formed body then is calcined at 1200°C for 4 hours, and further ground in a ball-mill or the like for about 20 hours, thereby to prepare a host material powder of $SrTiO_3$.

Next, $SrTiO_3$, $Y_2O_3$, $Co_2O_3$, $CuO$, $Ag_2O$ and $MnO_2$, and further, one of $B_2O_3$, $NiO$, $MoO_3$, $BeO$, $Fe_2O_3$, $Al_2O_3$, $Li_2O$, $Cr_2O_3$, $PbO$, $CaO$, $TiO_2$, $P_2O_5$, $Sb_2O_3$ and $V_2O_5$ are added in composition ratios shown in Table 15, and press-formed and fired in the same manner as in Example 1. And the resulting element was measured under similar conditions as those of Example 1, and the results are shown in Table 16.

TABLE 15

| Sample No. | Composition ratio | | | | | | | |
|---|---|---|---|---|---|---|---|---|
| | SrTiO$_3$ | Y$_2$O$_3$ | Co$_2$O$_3$ | CuO | Ag$_2$O | MnO$_2$ | Additive | |
| 1* | 99.999 | 0.001 | — | — | — | — | — | |
| 2* | 99.998 | 0.001 | 0.001 | — | — | — | — | |
| 3* | 99.997 | 0.001 | 0.001 | 0.001 | — | — | — | |
| 4* | 99.996 | 0.001 | 0.001 | 0.001 | 0.001 | — | — | |
| 5 | 99.995 | 0.001 | 0.001 | 0.001 | 0.001 | 0.001 | — | |
| 6 | 99.986 | 0.010 | 0.001 | 0.001 | 0.001 | 0.001 | — | |
| 7 | 99.896 | 0.100 | 0.001 | 0.001 | 0.001 | 0.001 | — | |
| 8 | 98.996 | 1.000 | 0.001 | 0.001 | 0.001 | 0.001 | — | |
| 9 | 97.996 | 2.000 | 0.001 | 0.001 | 0.001 | 0.001 | — | |
| 10* | 95.996 | 4.000 | 0.001 | 0.001 | 0.001 | 0.001 | — | |
| 11 | 99.397 | 0.500 | 0.100 | 0.001 | 0.001 | 0.001 | — | |
| 12 | 98.497 | 0.500 | 1.000 | 0.001 | 0.001 | 0.001 | — | |
| 13 | 97.497 | 0.500 | 2.000 | 0.001 | 0.001 | 0.001 | — | |
| 14* | 95.497 | 0.500 | 4.000 | 0.001 | 0.001 | 0.001 | — | |
| 15 | 99.298 | 0.500 | 0.100 | 0.100 | 0.001 | 0.001 | — | |
| 16 | 98.398 | 0.500 | 0.100 | 1.000 | 0.001 | 0.001 | — | |
| 17* | 97.398 | 0.500 | 0.100 | 2.000 | 0.001 | 0.001 | — | |
| 18 | 99.199 | 0.500 | 0.100 | 0.100 | 0.100 | 0.001 | — | |
| 19 | 98.299 | 0.500 | 0.100 | 0.100 | 1.000 | 0.001 | — | |
| 20* | 97.299 | 0.500 | 0.100 | 0.100 | 2.000 | 0.001 | — | |
| 21 | 99.100 | 0.500 | 0.100 | 0.100 | 0.100 | 0.100 | — | |
| 22 | 98.200 | 0.500 | 0.100 | 0.100 | 0.100 | 1.000 | — | |
| 23* | 97.200 | 0.500 | 0.100 | 0.100 | 0.100 | 2.000 | — | |
| 24 | 98.899 | 0.500 | 0.100 | 0.100 | 0.100 | 0.300 | B$_2$O$_3$ | 0.001 |
| 25 | 98.899 | 0.500 | 0.100 | 0.100 | 0.100 | 0.300 | NiO | 0.001 |
| 26 | 98.800 | 0.500 | 0.100 | 0.100 | 0.100 | 0.300 | MoO$_3$ | 0.100 |
| 27 | 98.800 | 0.500 | 0.100 | 0.100 | 0.100 | 0.300 | Fe$_2$O$_3$ | 0.100 |
| 28 | 97.900 | 0.500 | 0.100 | 0.100 | 0.100 | 0.300 | Al$_2$O$_3$ | 1.000 |
| 29 | 97.900 | 0.500 | 0.100 | 0.100 | 0.100 | 0.300 | Li$_2$O | 1.000 |
| 30 | 96.900 | 0.500 | 0.100 | 0.100 | 0.100 | 0.300 | CaO | 2.000 |

26

TABLE 15 (Cont'd)

| Sample No. | Composition ratio | | | | | | Additive | |
|---|---|---|---|---|---|---|---|---|
| | SrTiO₃ | Y₂O₃ | Co₂O₃ | CuO | Ag₂O | MnO₂ | | |
| 31 | 96.900 | 0.500 | 0.100 | 0.100 | 0.100 | 0.300 | TiO₂ | 2.000 |
| 32* | 94.900 | 0.500 | 0.100 | 0.100 | 0.100 | 0.300 | B₂O₃ | 4.000 |
| 33 | 98.790 | 0.500 | 0.100 | 0.100 | 0.100 | 0.300 | B₂O₃<br>Fe₂O₃ | 0.010<br>0.100 |
| 34 | 98.645 | 0.500 | 0.100 | 0.100 | 0.100 | 0.300 | Al₂O₃<br>Li₂O<br>CaO<br>TiO₂ | 0.100<br>0.005<br>0.100<br>0.050 |
| 35 | 98.500 | 0.500 | 0.100 | 0.100 | 0.100 | 0.300 | MoO₃<br>CaO | 0.100<br>0.300 |
| 36 | 98.887 | 0.500 | 0.100 | 0.100 | 0.100 | 0.300 | PbO<br>Al₂O₃ | 0.010<br>0.300 |
| 37 | 98.445 | 0.500 | 0.100 | 0.100 | 0.100 | 0.300 | Fe₂O₃<br>Cr₂O₃<br>TiO₂ | 0.005<br>0.150<br>0.300 |
| 38* | 96.300 | 0.500 | 0.100 | 0.100 | 0.100 | 0.300 | BeO<br>Li₂O<br>CaO | 0.100<br>1.000<br>1.500 |

Marked * are comparison examples which are outside the scope of Claims 7 and 8, respectively.

TABLE 16

| Sample No. | $V_{1mA/mm}$(V) | α | ε | tan δ(%) |
|---|---|---|---|---|
| 1* | 83.0 | 1.3 | $1.0 \times 10^6$ | 94.0 |
| 2* | 50.6 | 6.0 | $1.9 \times 10^4$ | 7.4 |
| 3* | 35.2 | 6.2 | $3.1 \times 10^4$ | 6.0 |
| 4* | 39.7 | 6.5 | $4.0 \times 10^4$ | 5.4 |
| 5 | 55.3 | 8.0 | $6.0 \times 10^4$ | 3.5 |
| 6 | 53.9 | 8.7 | $6.1 \times 10^4$ | 3.4 |
| 7 | 50.5 | 8.9 | $6.4 \times 10^4$ | 3.6 |
| 8 | 64.2 | 9.1 | $5.6 \times 10^4$ | 3.3 |
| 9 | 80.5 | 9.9 | $4.8 \times 10^4$ | 3.2 |
| 10* | 209.4 | 10.5 | $1.5 \times 10^3$ | 3.1 |
| 11 | 59.0 | 9.1 | $5.2 \times 10^4$ | 3.4 |
| 12 | 48.7 | 8.9 | $5.3 \times 10^4$ | 3.5 |
| 13 | 48.8 | 8.5 | $5.9 \times 10^4$ | 4.4 |

TABLE 16 (Cont'd)

| Sample No. | $V_{1mA/mm}(V)$ | $\alpha$ | $\varepsilon$ | tan $\delta$(%) |
|---|---|---|---|---|
| 14* | 55.9 | 5.5 | $7.5 \times 10^4$ | 30.4 |
| 15 | 58.2 | 7.4 | $4.5 \times 10^4$ | 3.0 |
| 16 | 100.0 | 8.9 | $3.9 \times 10^4$ | 2.8 |
| 17* | 341.3 | 12.0 | $1.7 \times 10^3$ | 0.9 |
| 18 | 63.4 | 8.5 | $4.0 \times 10^4$ | 3.3 |
| 19 | 100.9 | 11.3 | $3.8 \times 10^4$ | 2.9 |
| 20* | 814.4 | 14.8 | $1.2 \times 10^3$ | 0.8 |
| 21 | 57.9 | 8.1 | $6.1 \times 10^4$ | 3.1 |
| 22 | 92.4 | 9.5 | $4.4 \times 10^4$ | 3.0 |
| 23* | 95.9 | 6.5 | $3.1 \times 10^4$ | 15.2 |
| 24 | 63.2 | 9.8 | $4.3 \times 10^4$ | 3.3 |
| 25 | 51.8 | 9.5 | $5.0 \times 10^4$ | 3.4 |
| 26 | 54.6 | 9.7 | $5.1 \times 10^4$ | 3.5 |
| 27 | 75.3 | 9.5 | $4.3 \times 10^4$ | 3.1 |
| 28 | 89.5 | 9.3 | $4.0 \times 10^4$ | 3.0 |
| 29 | 83.4 | 9.2 | $4.0 \times 10^4$ | 2.9 |
| 30 | 108.9 | 9.3 | $4.5 \times 10^4$ | 2.8 |
| 31 | 99.0 | 9.6 | $3.4 \times 10^4$ | 2.8 |
| 32* | 354.1 | 4.0 | $1.0 \times 10^3$ | 4.4 |
| 33 | 63.8 | 9.2 | $3.9 \times 10^4$ | 2.5 |
| 34 | 81.5 | 9.6 | $4.0 \times 10^4$ | 2.4 |
| 35 | 60.5 | 9.9 | $5.2 \times 10^4$ | 2.3 |
| 36 | 45.4 | 9.0 | $5.6 \times 10^4$ | 3.2 |
| 37 | 95.7 | 10.4 | $3.8 \times 10^4$ | 3.0 |
| 38* | 385.2 | 15.1 | $1.0 \times 10^3$ | 0.9 |

Marked * are comparison examples which are outside the scope of Claims 7 and 8, respectively.

As shown by the Examples 1—3, the addition of $Y_2O_3$ accelerates semiconductorization of $SrTiO_3$, $Sr_{1-x}Ba_xTiO_3$ and $Sr_{1-x}Ca_xTiO_3$, and thereby can decrease specific resistance when the reducing firing is made and shows varistor characteristic when it is reoxidized in the air. However, when the additive is only $Y_2O_3$, the $\alpha$ is small and the tan $\delta$ is large, and the element is not suitable for actual use.

Additions of $Ca_2O_3$ and CuO induce increase of $\alpha$ and decrease of tan $\delta$.

Additions of $Ag_2O$ or $Al_2O_3$ improves varistor characteristics, keeping the capacitor characteristics.

The reason of the above-mentioned changes of characteristics by the additions is that these additives segregate at grain boundaries, thereby selectively increasing the resistance of the grain boundaries. The grain boundaries of high resistance formed in this way functions as capacitors having a very short gap between electrodes, as well as varistor. Therefore, the resultant element becomes a varistor having a large capacity.

As the additives give the grain boundary a high resistance to give the characteristics of a capacitor and a varistor at the same time, $ZrO_2$, $BaO$, $SiO_2$, $MgO$, $MnO_2$, $B_2O_3$, $NiO$, $MoO_3$, $BeO$, $Fe_2O_3$, $Li_2O$, $Cr_2O_3$, $PbO$, $CaO$, $TiO_2$, $P_2O_5$, $Sb_2O_3$ and $V_2O_5$ are especially effective.

These additives are effective when added in an amount of at least 0.001 mol%, but when the amount exceeds 3.000 mol% the characteristics become poor. The reason of the characteristics becoming poor is due to the increase of the thickness of the grain boundaries, hence decrease of capacitance thereof, which induces increase of varistor voltage and deterioration of varistor characteristics.

The average diameter of the grains of the element is about 100 μm, and the larger the diameter becomes the more effective in lowering varistor voltage.

Besides, the additives mentioned in the above-mentioned Examples, other additives, such as two or more kinds of oxides selected from the group consisting of $ZrO_2$, $BaO$, $SiO_2$, $MgO$, $MnO_2$, $B_2O_3$, $NiO$, $MoO_3$, $BeO$, $Fe_2O_3$, $LiO_2$, $Cr_2O_3$, $PbO$, $CaO$, $TiO_2$, $P_2O_5$, $Sb_2O_3$ and $V_2O_5$ can be used, and in such case a similar good effect is obtainable.

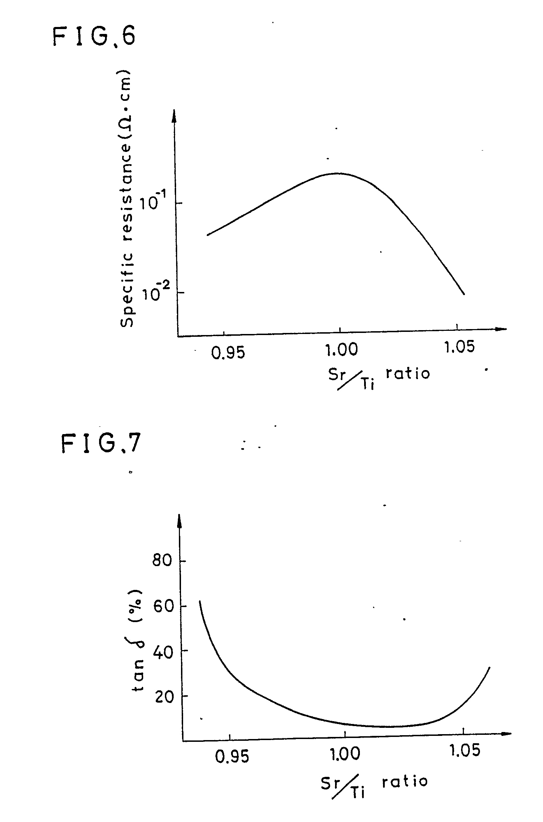

With respect to the ratio of Sr/Ti this is regarded to be effective regarding the dielectric characteristics of the dielectric substance of grain boundary type. For instance, the relation between Sr/Ti ratio and specific resistance $\rho$ and tan $\delta$ of the completed element are as shown in Fig. 6 and Fig. 7. As can be understood from these graphs, when the ratio Sr/Ti differs from 1 the specific resistance $\rho$ decreases and the semiconductorization is increased. Accordingly, the dielectric constant $\varepsilon$ increases. On the other hand, as the ratio Sr/Ti differs from 1, the value tan $\delta$ increases. Accordingly, in actual elements, the Sr/Ti ratio within a range of 1.05—0.95 is desirable in view of the harmony between the specific resistance $\rho$ and tan $\delta$.

On an element manufactured by the above-mentioned process, electrodes were provided by, for instance, conductive paint containing conductive material such as Ag or the like, to complete a capacitor-varistor complex element to serve as a noise filter shown in Fig. 4. When noise A shown in Fig. 5 was impressed on the complex element, the output B of Fig. 5 was obtained. As is obvious from the comparison of curve A with curve B, noise is satisfactorily removed for all ranges of frequency by this complex element filter. This is in contradistinction to the conventional filters shown by the curve C when noise elimination is not satisfactorily for all ranges especially in the low frequency range. This filter is advantageous in comprising very few component parts and having no internal connections, and hence, compactness of the configuration and size. The filter in accordance with the present invention is suitable for noise suppressing circuits in various kinds of electric and electronic appliances which is necessary for a protection of semiconductor devices in such appliances, and is very useful in industrial application.

**Claims**

1. A voltage-dependent non-linear resistance ceramic composition comprising:
   95.000—99.997 mol% of $SrTiO_3$ wherein ratios of Sr/Ti are 1.05—0.95, $Sr_{1-x}Ba_xTiO_3$ $(0.001 \leqq x \leqq 0.300)$ or $Sr_{1-x}Ca_xTiO_3$ $(0.001 \leqq x \leqq 0.300)$ as host material,
   0.001—2.000 mol% of $Y_2O_3$,
   0.001—2.000 mol% of $Co_2O_3$, and
   0.001—1.000 mol% of $CuO$.

2. A voltage-dependent non-linear resistance ceramic composition comprising:
   92.000—99.996 mol% of $SrTiO_3$ wherein ratios of Sr/Ti are 1.05—0.95, $Sr_{1-x}Ba_xTiO_3$ $(0.001 \leqq x \leqq 0.300)$ or $Sr_{1-x}Ca_xTiO_3$ $(0.001 \leqq x \leqq 0.300)$ as host material,
   0.001—2.000 mol% of $Y_2O_3$,
   0.001—2.000 mol% of $Co_2O_3$,
   0.001—1.000 mol% of $CuO$, and
   0.001—3.000 mol% of metal oxide(s) of at least one selected from the group consisting of $Ag_2O$ and $Al_2O_3$.

3. A voltage-dependent non-linear resistance ceramic composition comprising:
   95.000—99.997 mol% of $Sr_{1-x}Ba_xTiO_3$ $(0.001 \leqq x \leqq 0.300)$,
   0.001—2.000 mol% of $Y_2O_3$,
   0.001—2.000 mol% of $Co_2O_3$, and
   0.001—1.000 mol% of $CuO$.

4. A voltage-dependent non-linear resistance ceramic composition comprising:
   92.000—99.996 mol% of $Sr_{1-x}Ba_xTiO_3$ $(0.001 \leqq x \leqq 0.300)$,
   0.001—2.000 mol% of $Y_2O_3$,
   0.001—2.000 mol% of $Co_2O_3$,
   0.001—1.000 mol% of $CuO$, and
   0.001—3.000 mol% of at least one of $Ag_2O$ and $Al_2O_3$.

5. A voltage-dependent non-linear resistance ceramic composition comprising:
   95.000—99.997 mol% of $Sr_{1-x}Ca_xTiO_3$ $(0.001 \leqq x \leqq 0.300)$,
   0.001—2.000 mol% of $Y_2O_3$,

0.001—2.000 mol% of $Co_2O_3$, and
0.001—1.000 mol% of CuO.

6. A voltage-dependent non-linear resistance ceramic composition comprising:
92.000—99.996 mol% of $Sr_{1-x}Ca_xTiO_3$ ($0.001 \leqq x \leqq 0.300$),
0.001—2.000 mol% of $Y_2O_3$,
0.001—2.000 mol% of $Co_2O_3$,
0.001—1.000 mol% of CuO, and
0.001—3.000 mol% of at least one of $Ag_2O$ and $Al_2O_3$.

7. A voltage-dependent non-linear resistance ceramic composition comprising:
93.000—99.995 mol% of $SrTiO_3$ having a Sr/Ti ratio of 1.050—0.950,
0.001—2.000 mol% of $Y_2O_3$,
0.001—2.000 mol% of $Co_2O_3$,
0.001—1.000 mol% of CuO,
0.001—1.000 mol% of $Ag_2O$, and
0.001—1.000 mol% of one oxide selected from the group consisting of $ZrO_2$, BaO, $SiO_2$, MgO and MnO.

8. A voltage-dependent non-linear resistance ceramic composition comprising:
91.000—99.994 mol% of $SrTiO_3$ having a Sr/Ti ratio of 1.050—0.950,
0.001—2.000 mol% of $Y_2O_3$,
0.001—2.000 mol% of $Co_2O_3$,
0.001—1.000 mol% of CuO,
0.001—1.000 mol% of $Ag_2O$,
0.001—1.000 mol% of one oxide selected from the group consisting of $ZrO_2$, BaO, $SiO_2$, MgO and $MnO_2$, and
0.001—1.000 mol% of at least one oxide selected from the group consisting of $B_2O_3$, NiO, $MoO_3$, BeO, $Fe_2O_3$, $Li_2O$, $Cr_2O_3$, PbO, CaO, $TiO_2$, $P_2O_5$, $Sb_2O_3$, $Al_2O_3$ and $V_2O_5$.

**Patentansprüche**

1. Eine spannungsabhängige keramische Zusämmensetzung mit nichtlinearem Widerstand enthältend:
95,000—99,997 Molprozent an $SrTiO_3$, wobei das Verhältnis von Sr/Ti 1,05—0,95 beträgt, $Sr_{1-x}Ba_xTiO_3$ ($0,001 \leqq x \leqq 0,333$) oder $Sr_{1-x}Ca_xTiO_3$ ($0,001 \leqq x \leqq 0,300$) als Grundmaterial,
0,001—2,000 Molprozent an $Y_2O_3$,
0,001—2,000 Molprozent an $Co_2O_3$, und
0,001—1,000 Molprozent an CuO.

2. Eine spannungsabhängige keramische Zusammensetzung mit nichtlinearem Widerstand enthaltend:
92,000 bis 99,996 Molprozent an $SrTiO_3$, wobei das Verhältnis von Sr/Ti 1,05—0,95 beträgt, $Sr_{1-x}Ba_xTiO_3$ ($0,001 \leqq x \leqq 0,300$) oder $Sr_{1-x}Ca_xTiO_3$ ($0,001 \leqq x \leqq 0,300$) als Trägermaterial
0,001—2,000 Molprozent an $Y_2O_3$,
0,001—2,000 Molprozent an $Co_2O_3$,
0,001—1,000 Molprozent an CuO, und
0,001—3,000 Molprozent an Metalloxid(en), wobie mindestens eines aus der Gruppe $Ag_2O$ und $Al_2O_3$ ausgewählt ist.

3. Eine spannungsabhänge keramische Zusammensetzung mit nicht linearem Widerstand enthaltend:
95,000—99,997 Molprozent an $Sr_{1-x}Ba_xTiO_x$ ($0,001 \leqq x \leqq 0,300$),
0,001—2,000 Molprozent an $Y_2O_3$,
0,001—2,000 Molprozent an $Co_2O_3$, und
0,001—1,000 Molprozent an CuO.

4. Eine spannungsabhängige keramische Zusammensetzung mit nicht-linearem Widerstand enthaltend:
92,000—99,996 Molprozent an $Sr_{1-x}Ba_xTiO_3$ ($0,001 \leqq x \leqq 0,300$),
0,001—2,000 Molprozent an $Y_2O_3$,
0,001—2,000 Molprozent an $Co_2O_3$,
0,001—1,000 Molprozent an CuO, und
0,001—3,000 Molprozent mindestens eines der Oxide $Ag_2O$ und $Al_2O_3$.

5. Eine spannungsabhängige keramische Zusammensetzung mit nicht-linearem Widerstand enthaltend:
95,000—99,997 Molprozent an $Sr_{1-x}Ca_xTiO_3$ ($0,001 \leqq x \leqq 0,300$),
0,001—2,000 Molprozent an $Y_2O_3$,
0,001—2,000 Molprozent an $Co_2O_3$, und
0,001—1,000 Molprozent an CuO.

**0 157 276**

6. Eine spannungsabhängige keramische Zusammensetzung mit nicht-linearem Widerstand enthaltend:

92,000—99,996 Molprozent an $Sr_{1-x}Ca_xTiO_3$ (0,001≦x≦0,300),

0,001—2,000 Molprozent an $Y_2O_3$,

0,001—2,000 Molprozent an $Co_2O_3$,

0,001—1,000 Molprozent an CuO, und

0,001—3,000 Molprozent mindestens eines der Oxide $Ag_2O$ und $Al_2O_3$.

7. Eine spannungsabhängig keramische Zusammensetzung mit nicht-linearem Widerstand enthaltend:

93,000—99,995 Molprozent an $SrTiO_3$ mit einem Verhältnis Sr/Ti von 1,050—0,950,

0,001—2,000 Molprozent an $Y_2O_3$,

0,001—2,000 Molprozent an $Co_2O_3$,

0,001—1,000 Molprozent an CuO,

0,001—1,000 Molprozent an $Ag_2O$, und

0,001—1,000 Molprozent eines Oxids ausgewählt aus der Gruppe bestehend aus $ZrO_2$, BaO, $SiO_2$, MgO und MnO.

8. Eine spannungsabhängige keramische Zusammensetzung mit nicht-linearem Widerstand enthaltend:

91,000 bis 99,994 Molprozent an $SrTiO_3$ mit einem Sr/Ti-Verhältnis von 1,050—0,950,

0,001—2,000 Molprozent an $Y_2O_3$,

0,001—2,000 Molprozent an $Co_2O_3$,

0,001—1,000 Molprozent an CuO,

0,001—1,000 Molprozent an $Ag_2O$,

0,001—1,000 Molprozent eines der Oxide ausgewählt aus der Gruppe bestehend aus $ZrO_2$, BaO, $SiO_2$, MgO und $MnO_2$, und

0,001—1,000 Molprozent mindestens eines Oxids ausgewählt aus der Gruppe bestehend aus $B_2O_3$, NiO, $MoO_3$, BeO, $Fe_2O_3$, $Li_2O$, $Cr_2O_3$, PbO, CaO, $TiO_2$, $P_2O_5$, $Sb_2O_3$, $Al_2O_3$ und $V_2O_5$.

**Revendications**

1. Composition en céramique pour résistance non-linéaire dépendant de la tension, comprenant:

95,000—99,997 moles% de $SrTiO_3$ où les rapports de Sr/Ti sont 1,05—0,95, du $Sr_{1-x}Ba_xTiO_3$ (0,001≦x≦0,300) ou de $Sr_{1-x}Ca_xTiO_3$ (0,001≦x≦0,300) comme matériau de base,

0,001—2,000 moles% de $Y_2O_3$,

0,001—2,000 moles% de $Co_2O_3$, et

0,001—1,000 moles% de CuO.

2. Composition en céramique pour résistance non-linéaire dépendant de la tension, comprenant:

92,000—99,996 moles% de $SrTiO_3$ où les rapports de Sr/Ti sont 1,05—0,95, du $Sr_{1-x}Ba_xTiO_3$ (0,001≦x≦0,300) ou du $Sr_{1-x}Ca_xTiO_3$ (0,001≦x≦0,300) comme matériau de base,

0,001—2,000 moles% de $Y_2O_3$,

0,001—2,000 moles% de $Co_2O_3$,

0,001—1,000 mole% de CuO et

0,001—3,000 moles% d'oxyde(s) métallique(s) d'au moins l'une des substances choisies dans le groupe constitué de $Ag_2O$ et $Al_2O_3$.

3. Composition en céramique pour résistance non linéaire dépendant de la tension, comprenant:

95,000—99,997 moles% de $Sr_{1-x}Ba_xTiO_3$ (0,001≦x≦0,300),

0,001—2,000 moles% de $Y_2O_3$,

0,001—2,000 moles% de $Co_2O_3$; et

0,001—1,000 mole% de CuO.

4. Composition en céramique pour résistance non-linéaire dépendant de la tenison, comprenant:

92,000—99,996 moles% de $Sr_{1-x}Ba_xTiO_3$ (0,001≦x≦0,300),

0,001—2,000 moles% de $Y_2O_3$,

0,001—2,000 moles% de $Co_2O_3$,

0,001—1,000 mole% de CuO et

0,001—3,000 moles% d'au moins $Ag_2O$ ou $Al_2O_3$.

5. Composition en céramique pour résistance non-linéaire dépendant de la tension comprenant:

95,000—99,997 moles% de $Sr_{1-x}Ca_xTiO_3$ (0,001≦x≦0,300),

0,001—2,000 moles% de $Y_2O_3$,

0,001—2,000 moles% de $Co_2O_3$, et

0,001—1,000 mole% de CuO.

6. Composition en céramique pour résistance non-linéaire dépendant de la tension, comprenant:

92,000—99,996 moles% de $Sr_{1-x}Ca_xTiO_3$ (0,001≦x≦0,300),

0,001—2,000 moles% de $Y_2O_3$,

0,001—2,000 moles% de $Co_2O_3$,

0,001—1,000 mole% de CuO, et

0,001—3,000 moles% d'au moins $Ag_2O$ ou $Al_2O_3$.

31

7. Composition en céramique pour résistance non-linéaire dépendant de la tension, comprenant:

93,000—99,995 moles% de $SrTiO_3$ ayant un rapport Sr/Ti de 1,050—0,950,

0,001—2,000 moles% de $Y_2O_3$,

0,001—2,000 moles% de $Co_2O_3$,

0,001—1,000 mole% de CuO

0,001—1,000 mole% de $Ag_2O$, et

0,001—1,000 mole% d'un oxyde choisi dans le groupe constitué de $ZrO_2$, BaO, $SiO_2$, MgO et MnO.

8. Composition en céramique pour résistance non-linéaire dépendant de la tension, comprenant:

91,000—99,994 moles% de $SrTiO_3$ ayant un rapport Sr/Ti de 1,050—0,950,

0,001—2,000 moles% de $Y_2O_3$,

0,001—2,000 moles% de $Co_2O_3$,

0,001—1,000 mole% de CuO,

0,001—1,000 mole% de $Ag_2O$,

0,001—1,000 mole% d'un oxyde choisi dans le groupe constitué de $ZrO_2$, BaO, $SiO_2$, MgO et $MnO_2$ et

0,001—1,000 mole% d'au moins un oxyde choisi dans le groupe constitué de $B_2O_3$, NiO, $MoO_3$, BeO, $Fe_2O_3$, $Li_2O$, $Cr_2O_3$, PbO, CaO, $TiO_2$, $F_2O_5$, $Sb_2O_3$, $Al_2O_3$ et $V_2O_5$.

F I G.1

F I G.2

F I G.3

F I G.4

1

# F I G . 5

FIG.6

FIG.7